# EUROPEAN PATENT APPLICATION

(11) **EP 1 574 454 A1**
(43) Date of publication of application: **14.09.2005**
(21) Application number: 03770070.5
(22) Date of filing: 31.10.2003
(51) Int. Cl.: B65D 85/57, G11B 23/03

(54) **CASE**

(30) Priority: 31.10.2002 JP 2002318201
(71) Applicant: MATSUSHITA ELECTRIC INDUSTRIAL CO., LTD., Osaka 571-8501 (JP)
(72) Inventor: TABUCHI, Shuji 570, Tsukadani, Okayama 708-0365 (JP)
(74) Representative: Stippl, Hubert
(86) International application number: PCT/JP2003/013980
(87) International publication number: WO 2004/039696

(57) **Abstract**

A case includes a bottom plate in a substantially rectangular shape, a first side plate rising from a border line of the bottom plate, a second side plate rising from a border line facing the border line of the bottom plate, so as to face the first side plate, and a third side plate rising from an edge perpendicular to the border line of the bottom plate. On an edge opposite to the edge of the bottom plate where the third side plate is provided, an entrance for inserting the cartridge is formed of the first and second side plates and the bottom plate. On an inner surface of the first side plate, a first rib having a top face parallel to the inner surface of the first side plate is provided with a height D 1 between the inner surface and the border line of the first side plate. On an inner surface of the second side plate, a second rib having a top face parallel to the inner surface of the second side plate is provided so as to face the first rib with a height D2 shorter than the height D1. On the inner surface of the first side plate on the entrance side with respect to the first rib, a first protrusion having an edge parallel to the inner surface of the first side plate is provided with a height D3 shorter than the height D1. A spatial distance D4 between the top face of the second rib and the inner surface of the first side plate, and a spatial distance D5 between the top face of the first protrusion and the inner surface of the second side plate are substantially equal to a width D6 of the cartridge in a direction orthogonal to the insertion direction in which the cartridge is inserted through the entrance.

## Description

### Technical Field

The present invention relates to a case for housing a cartridge in which a disk-shaped information medium is placed rotatably.

### Background Art

As a cartridge in which a disk-shaped information medium is placed, for example, a magneto-optical disk cartridge is known. As a case in which the cartridge is engaged to be housed, a disk cartridge case is proposed, for example, as disclosed in JP5(1993)-278772A (paragraphs 0021 to 0049, FIGS. 1 and 7)(Patent Document 1). In this disk cartridge case, a cartridge is inserted in an open direction of a shutter through an opening provided with a cut-away portion of a sleeve case having a top plate and a bottom plate facing to be connected with each other, and the cartridge is engaged to be housed into a back side, using an engagement portion that is engaged with a pair of holes placed on a shutter engagement side surface of the cartridge and a side surface corresponding to the shutter engagement side surface. When the cartridge is removed from the sleeve case, the cartridge exposed from the cut-away portion provided in the opening is grabbed and pulled out.

According to the technique proposed in the above-mentioned Patent Document 1, surfaces on which the cartridge and the case slide to be engaged correspond to a shutter sliding side surface on which the shutter and upper and lower halves slide and a side surface facing the shutter sliding side surface, and basically, both the side surfaces are provided partially with concaves in flat surfaces. Therefore, it is necessary to provide a groove for housing the thickness of the cartridge, and consequently, the thickness of the case is increased.

The object of the present invention is to provide a case in which the thickness in a direction substantially perpendicular to a disk housed in a cartridge can be made smaller, and foreign matter such as dust can be suppressed from adhering to the disk housed in the cartridge.

### Disclosure of Invention

A case according to the present invention includes a bottom plate in a substantially rectangular shape, and a first side plate and a second side plate rising respectively from a pair of border lines forming the bottom plate and facing each other, either one edge side orthogonal to the pair of border lines being an entrance, an insertion being inserted toward the other edge side to be housed in the case. On an inner surface of the first side plate where the first side plate and the second side plate face each other, a first rib having a top face parallel to the inner surface of the first side plate is provided, with a height D1 between the inner surface of the first side plate and the top face of the first rib. On an inner surface of the second side plate where the second side plate and the first side plate face each other, a second rib having a top face parallel to the inner surface of the second side plate is provided so as to face the first rib, with a height D2 shorter than the height D1. On the inner surface of the first side plate on the entrance side with respect to the first rib, a first protrusion having a top face parallel to the inner surface of the first side plate is provided with a height D3 shorter than the height D1. Both a spatial distance D4 between the top face of the second rib and the inner surface of the first side plate, and a spatial distance D5 between the top face of the first protrusion and the inner surface of the second side plate allow a width D6 of the insertion in a facing direction of the first side plate and the second side plate to be inserted with a loose fit.

According to a method for opening a shutter of a cartridge according to the present invention, the shutter of the cartridge is opened by inserting, into the case of claim 1, the cartridge including an upper half and a lower half that face each other with a gap for housing a disk-shaped information medium interposed therebetween, an opening window portion for exposing a part of the disk-shaped information medium through the upper half and/or the lower half, a shutter for opening and closing the opening window portion, a front wall engaged with the shutter to connect the upper half to the lower half, a first side wall and a second side wall respectively being connected to the upper half and the lower half and to the front wall, and a back wall facing the front wall, and groove portions having steps on side walls respectively formed from boundary lines between the first side wall and the front wall, and the second side wall and the front wall. The method includes: a first step of inserting the cartridge into the entrance of the case; a second step of inserting the first protrusion along the groove portion formed on the first side wall; and a third step of inserting the first rib along the groove portion formed on the first side wall, and inserting the second rib along the groove portion formed on the second side wall. An opening and closing engagement portion for opening and closing the shutter is engaged with the first protrusion between the second step and the third step to open the shutter.

### Brief Description of Drawings

FIG. 1A is a perspective view showing a configuration of a case according to the present embodiment.
FIG. 1B is a perspective view showing another configuration of the case according to the present embodiment.
FIG. 1C is a perspective view showing still another configuration of the case according to the present embodiment.
FIG. 1D is a perspective view showing still another configuration of the case according to the present embodiment.
FIG. 2 is a plan view showing a configuration of the case according to the present embodiment.
FIG. 3 is a plan view showing another configuration of the case according to the present embodiment.
FIG. 4 is a right side view showing another configuration of the case according to the present embodiment.
FIG. 5 is a left side view showing another configuration of the case according to the present embodiment.
FIG. 6 is a side view of another case according to the present embodiment, seen from an open side surface.
FIG. 7 is a plan view showing a configuration of a cartridge in a shutter-closed state according to the present embodiment.
FIG. 8 is a plan view showing a configuration of a cartridge in a shutter-open state according to the present embodiment.
FIG. 9 is a back view showing a configuration of a cartridge according to the present embodiment.
FIG. 10 is a view showing an engagement state between the cartridge and the case according to the present embodiment.
FIG. 11 is a view showing a state where the cartridge has been housed in the case according to the present embodiment.
FIG. 12 is a view showing an engagement state between the cartridge and the case according to the present embodiment.
FIG. 13 is a cut-away view showing an enlarged main portion of the cartridge according to the present embodiment.
FIG. 14 is a view showing a state where the cartridge has been housed in the case according to the present embodiment.
FIG. 15 is a plan view of the cartridge according to the present embodiment.
FIG. 16 is a view showing a door-open state of the cartridge according to the present embodiment.
FIG. 17 is a view showing an engagement starting state between the cartridge and the case according to the present embodiment.
FIG. 18 is a view showing a state where the cartridge is being engaged with the case according to the present embodiment.
FIG. 19 is a view showing a state where the cartridge is being engaged with the case according to the present embodiment.
FIG. 20 is a back view showing a state where the cartridge has been housed in the case according to the present embodiment.
FIG. 21 is a view showing a configuration of the cartridge to be housed in the case of the present embodiment.
FIG. 22A is a perspective view showing a cover of the case according to the present embodiment.
FIGS. 22B to 22H are perspective views showing another cover of the case according to the present embodiment.

### Best Mode for Carrying Out the Invention

In a case according to the present embodiment, a spatial distance D4 between a top face of a second rib and an inner surface of a first side plate, and a spatial distance D5 between an edge of a first protrusion and an inner surface of a second side plate are substantially equal to a width D6 of an insertion in a direction orthogonal to an insertion direction in which the insertion in the case is inserted through an entrance. Therefore, when housing the insertion, irrespective of which surface of the insertion faces a bottom plate of the case, the spatial distance D5 between a first protrusion and an inner surface of the second side plate, and the spatial distance D4 between the second rib and the inner surface of the first side plate define an insertion limit of the insertion. In addition, as long as the insertion direction of the insertion into the case is the same, the insertion can be mounted in the case, irrespective of whether the front surface or the back surface of the insertion faces the bottom plate of the case.

In the present embodiment, it is preferable that, on the inner surface of the first side plate on the entrance side with respect to the first protrusion, a second protrusion having an edge parallel to the inner surface of the first side plate is provided, with the height D3, and on the inner surface of the first side plate between the first protrusion and the second protrusion, a rack is provided with a height D7 equal to or shorter than the height D3.

The side wall of the insertion slides to be engaged with the second protrusion and/or the rack portion. Therefore, by applying a non-uniform force in a direction of the side wall of the insertion during insertion of the insertion, for example, the resistance can be suppressed when the insertion is inserted while the corner on a front side of the insertion contacts the first protrusion and the second side surface of the case, whereby the insertion precision of the insertion with respect to the case can be enhanced. When a configuration is adopted in which a third rib with a height shorter than that of the second rib is provided on an inner surface of the second side plate with the second rib, and on a back side in the insertion direction with respect to the position facing the second protrusion, the insertion resistance of the insertion in the side wall direction can be further reduced, which is desirable, The height of the third rib is shorter than the height of the second rib. Therefore, the distance between the top face of the third rib and the side surface with the first rib extending therefrom is longer than the width of the insertion, orthogonal to the direction in which the insertion is inserted in the case. This is more preferable than the configuration in which the height of the third rib is set to be identical with that of the second rib, because insertion with a loose fit that allows for approximate guiding is preferable at a starting time of insertion of the insertion into the case.

The following configuration is preferable. The insertion is a cartridge including an upper half and a lower half facing each other with a gap for housing a disk-shaped information medium placed therebetween, an opening window portion for exposing a part of the disk-shaped information medium through the upper half and/or the lower half, a shutter for opening and closing the opening window portion, a front wall engaged with the shutter to connect the upper half to the lower half, a first side wall and a second side wall respectively connecting the upper half and the lower half to the front wall, and a back wall facing the front wall. The cartridge includes a first partial stepped groove formed on a part of the first side wall, having a step in a direction toward the second side wall substantially at a center of the gap between the upper half and the lower half from an engagement line at which the first side wall is engaged with the front wall to the back wall, and a second partial stepped groove having a step in a direction toward the first side wall, formed on the second side wall at a position facing the first partial stepped groove, and the first protrusion and the first rib slide to contact the first partial stepped groove, and the second rib slides to contact the second partial stepped groove, whereby the cartridge is inserted in the case.

When the cartridge is inserted through the entrance, first, the first partial stepped groove is engaged with the first protrusion, and then, the spatial distance D5 between the edge of the first protrusion and the inner surface of the second side plate is inserted with a loose fit in the width direction (D6) orthogonal to the insertion direction of the cartridge, whereby approximate positioning can be performed. When the insertion operation with respect to the case proceeds, the first rib and the second rib slide to contact the first partial stepped groove and the second partial stepped groove. Thus, the position of the cartridge with respect to the case is determined, whereby the insertion precision of the cartridge with respect to the case can be enhanced. In the case of inserting the cartridge with the upper half and the lower half, to face the bottom plate of the case, being positioned in an opposite direction (i.e., in the case of engaging the first side plate of the case with the second side wall of the cartridge), the cartridge can be inserted similarly, and the position of the cartridge with respect to the case can be determined.

Furthermore, it is preferable that the insertion in the case is a cartridge, each front edge of the upper half and the lower half, engaged with the front wall of the cartridge, forms an arc-shape, and the shutter includes an opening and closing engagement member for opening and closing the opening window portion by rotating along the arc-shape, and the opening and closing engagement member includes a full-length stepped groove having a step on the second side wall over an entire length of the first side wall substantially at a center between the upper half and the lower half on the first side wall, has a first hole and a second hole with which the second protrusion is engaged, and a gear portion engaged with the rack between the first hole and the second hole.

When the cartridge is inserted in the case in such a direction that the side surface which is an inner surface of the first side plate of the case with the first rib, the first protrusion, the rack portion, and the second protrusion extending therefrom is engaged with the full-length stepped groove, the shutter of the cartridge can be opened only with the insertion operation with respect to the case, or the shutter of the cartridge can be closed only with the removal operation from the case. In contrast, when the cartridge is inserted in the case in such a direction that the side surface of the case with the second rib extending therefrom is engaged with the full-length stepped groove of the cartridge, the cartridge can be inserted in the case without the shutter being opened and closed, and the presence/absence of the opening and closing operation of the shutter can be selected depending upon the direction of the front and back of the cartridge with respect to the case. Consequently, for example, the disk-shaped information medium housed in the cartridge can be cleaned with the cartridge remaining housed in the case, and for example, when a door for removing the disk-shaped information medium housed in the cartridge is provided on a back side in the insertion direction of the cartridge, the disk-shaped information medium is removed from the cartridge through the door, and can be used with a recording and reproducing apparatus that is not ready for a cartridge.

The configuration including a third side plate rising from the other edge facing the entrance via the bottom plate of the case, with the same height as that of the first side plate and the second side plate is more preferable than the configuration including the first side plate and the second side plate on the bottom plate. This is because the mechanical strength is enhanced, and the insertion limit in the insertion direction of the insertion such as a cartridge can be defined by the third side plate.

It is preferable that the insertion has a box-shaped body including a front wall to be inserted through the entrance, and a first side wall and a second side wall, respectively facing the first side plate and the second side plate of the front wall, the box-shaped body including a first partial stepped groove having a first bottom portion with a dent D8, extending from an engagement portion between the first front wall and the front wall in parallel with the bottom plate, and a second partial stepped groove having a second bottom portion with a dent D8, extending from an engagement portion between the second front wall and the front wall in parallel with the bottom plate, and when the insertion is housed, a distance D9 between the first bottom portion and the second bottom portion is fit between the top face of the first rib and the top face of the second rib. The reason for this is that, even in the case where the entrance side is tilted downward, the insertion such as a cartridge can be suppressed from dropping from the case, and the position of the insertion can be determined in the insertion direction.

It is preferable that the configuration is adopted which includes a cover using, as a rotation axis, either edge of the first side plate parallel to the bottom plate, either edge of the second side plate parallel to the bottom plate, an edge of the bottom plate forming the entrance, an edge facing the edge of the bottom plate forming the entrance via the bottom plate, or either edge of the third side plate parallel to the bottom plate. The reason for this is that, even in the case where the insertion such as a cartridge is stored for a long period of time in the case, dust and the like can be suppressed from adhering to the insertion.

According to a method for opening a shutter of a cartridge, the shutter of the cartridge is opened by inserting, into a case, the cartridge including an upper half and a lower half facing each other with a gap for housing a disk-shaped information medium interposed therebetween, an opening window portion for exposing a part of the disk-shaped information medium through the upper half and/or the lower half, a shutter for opening and closing the opening window portion, a front wall engaged with the shutter to connect the upper half to the lower half, a first side wall and a second side wall respectively connecting the upper half and the lower half to the front wall, and a back wall facing the front wall, and groove portions having steps on side walls respectively facing boundary lines between the first side wall and the front wall, and the second side wall and the front wall. The method includes: a first step of inserting the cartridge into the entrance of the case; a second step of inserting the first protrusion along the groove portion formed on the first side wall; and a third step of inserting the first rib along the groove portion formed on the first side wall, and inserting the second rib along the groove portion formed on the second side wall. An opening and closing engagement portion for opening and closing the shutter is engaged with the first protrusion between the second step and the third step, whereby the opening operation of the shutter is completed.

Thus, even when the insertion direction of the cartridge with respect to the case is the same, depending upon the front and back of the cartridge to be inserted in the case, it is possible to freely select the configuration in which the opening and closing operation of the shutter is started in accordance with the insertion and removal operation of the cartridge with respect to the case, and the configuration in which the opening and closing operation of the shutter is not started even by the insertion and removal operation of the cartridge with respect to the case. Furthermore, in the case where the shutter is opened and closed due to the insertion and removal of the cartridge with respect to the case, the surface of a disk-shaped information medium partially exposed from an opening window of an opened shutter corresponds to the surface of an information layer for recording and reproduction by a recording and reproducing apparatus, which is useful, for example, for cleaning the information layer.

Furthermore, according to a method for opening a shutter of a cartridge according to the present embodiment, the shutter of the cartridge is opened by inserting, into the case of claim 2, the cartridge including an upper half and a lower half facing each other with a gap for housing a disk-shaped information medium interposed therebetween, an opening window portion for exposing a part of the disk-shaped information medium through the upper half and/or the lower half, a shutter for opening and closing the opening window portion, a front wall engaged with the shutter to connect the upper half to the lower half, a first side wall and a second side wall respectively connecting the upper half and the lower half to the front wall, and a back wall facing the front wall, each edge of the upper half and the lower half engaged with the front wall forming an arc-shape, groove portions having steps on the side walls respectively facing boundary lines between the first side wall and the front wall, and between the second side wall and the front wall, and an opening and closing engagement member formed on the first side wall so as to allow the shutter to rotate along the arc-shape, thereby opening and closing the opening window portion, and having a first hole, a second hole, and a gear portion between the first hole and the second hole. The method includes: a first step of inserting the cartridge into the entrance of the case; a second step of inserting the second protrusion along the groove portion formed on the first side wall, and engaging the second protrusion with the first hole provided in the opening and closing member; a third step of engaging the rack provided on the first side plate of the case with the gear portion to allow the shutter to rotate; and a fourth step of engaging the first protrusion provided on the first side plate with the second hole to complete an opening operation of the shutter.

Thus, the opening and closing engagement member having the first hole, the gear portion, and the second hole, provided in the cartridge is engaged with the first protrusion, the rack portion, and the second protrusion in the full-length stepped groove, whereby the shutter can be opened by rotation to open the opening window portion. Furthermore, the shutter opened while being housed in the case can be closed merely by following an opposite path to remove the cartridge from the case. In contrast, when the full-length stepped groove is engaged with the side surface with the second rib extending therefrom, the cartridge can be housed in the case without opening the shutter.

A cartridge applicable to the present invention basically has a configuration in which a lower half and an upper half are integrated with each other at an interface by way of fusion, adhesion, a screw, or the like, and has a disk housing portion for housing a disk-shaped information medium (hereinafter, referred to as a disk) in the pair of halves. The lower half includes an optical pickup for exposing a part of the disk to optically record and/or reproduce information (hereinafter, referred to as recording/reproducing), and an opening window portion through which, a turntable integrated with rotation means for rotating a disk such as a spindle motor so as to place a disk thereon, can be inserted. Furthermore, the upper half may have a function of being engaged with the lower half so that a disk can be housed and stored in the disk housing portion. For example, the entire surface of the upper half may be covered with a plate, and the upper half may be provided with the same opening window portion as that of the lower half. It also may be possible that substantially the entire disk surface on the upper half side is exposed, and the upper half is provided with an exposure hole closing the disk housing portion only in the vicinity of an outer circumferential portion of the disk. Furthermore, the following configuration may be provided in which one side wall of the cartridge, the lower half, or the upper half may have a door, and the disk housed in the cartridge can be removed by opening the door. A history designating portion for leaving the history of opening the door in the cartridge may be provided.

Furthermore, the cartridge has a shutter to be engaged therewith. The shutter needs to have a function of opening the opening window portion when the cartridge is housed in the recording and/or reproducing apparatus (hereinafter, referred to as a recording/reproducing apparatus) and the disk is at a recording/reproducing position, and closing the opening window portion when the disk is out of the recording/reproducing position. The opening and closing operation of the shutter may have either a configuration in which the shutter reciprocates linearly in a direction substantially orthogonal to a pair of straight lines of the opening window portion, or a configuration in which the shutter rotates so as to reciprocate substantially around a center hole of the disk. The shutter is opened and closed with a member called a shutter opener provided in the recording/reproducing apparatus. A shutter engagement portion to be engaged with the shutter opener needs to be provided in the cartridge. The shutter engagement portion may be any of a concave portion provided on a side wall on a shutter side in a direction (although referred to as a so-called thickness direction, height direction, or the like; herein, referred to as a thickness direction) vertical to the circumference of the disk as in a cartridge described in, for example, Patent Document 1; a protrusion portion in the case of a configuration in which a side wall on a shutter side projects from a side wall of the cartridge with which the side wall on a shutter side is engaged (hereinafter, referred to as a side wall on a shutter side or a full-length stepped groove side wall); and a convex or concave portion to be engaged with the shutter, provided on a side wall that is adjacent to the side wall on a shutter side to be engaged with the shutter and regulating the thickness direction of the cartridge (hereinafter, referred to as a side end wall or a side wall on a front side). In the case of adopting the above-mentioned portion to be engaged as the shutter engagement portion, when a groove portion having a predetermined depth is provided in the direction of a disk housed in the cartridge is provided on the side end wall, and the portion to be engaged is substantially buried in the groove portion, the portion to be engaged does not project from the side end wall of the cartridge. Furthermore, in the case of the configuration in which the shutter rotates so as to reciprocate, by setting the outer shape of the shutter to be an arc-shape from the rotation center, the rotation operation of the shutter can be performed smoothly. In the case of setting the outer shape of the shutter to be an arc-shape, the side wall on a side also can be set to be an arc-shape.

The case of the present invention basically is shaped in such a manner that a cartridge is inserted to be housed in the case. Therefore, the case includes a plate portion substantially parallel to the housed cartridge, and a rib and a protrusion portion extending from a pair of side surfaces substantially in parallel with the plate portion, in a substantially U-shape in which the pair of side surfaces extend from end faces of the plate portion orthogonal to the insertion direction (hereinafter, referred to as a vertical direction; the length of the cartridge in the vertical direction being identified as the vertical length of the cartridge, and the length of the case in the vertical direction being identified as the vertical length of the case) of the cartridge. Furthermore, when the cartridge is housed in the case of the present invention, the cartridge slides to be inserted from the side surface substantially in parallel with the plate portion, so that any one of four end faces of the plate portion is assumed to be an opening side surface without a side surface.

The length of the plate portion in the insertion direction of the cartridge basically may be equal to or longer than that of the cartridge. In the configuration in which the insertion side of the cartridge (hereinafter, referred to as a front side or a front side of a cartridge) is stopped with the side surface of the case, the inner surface of the third side plate (hereinafter, referred to as a side surface on a front side) is provided on the front side of the case, and hence, the vertical length of the case may be set in view of the vertical length of the cartridge and the thickness of the front side surface. It is preferable that the front side surface is provided, because the mechanical strength of the case is increased. Furthermore, regarding the direction orthogonal to the cartridge insertion direction of the bottom plate (hereinafter, referred to as a width direction; the length of the cartridge in the width direction being referred to as the width of a cartridge, and the length of the case in the lateral direction being referred to as the width of the case), the width of the cartridge may be inserted inside the pair of side surfaces, on the basis of the width of the cartridge and the special distance between a pair of side plate inner surfaces extending from the end surfaces of the bottom plate. The height of the rib extending respectively from the side surfaces is determined in view of the shape such as the distance between the upper half and the lower half of the cartridge.

Furthermore, as described above, a pair of side surfaces of the case are engaged with the side walls of the cartridge, whereby the cartridge is stored to be housed in the case. Therefore, the length of the case in the vertical direction with respective to the bottom plate (hereinafter, referred to as the thickness of the case) may be basically equal to or smaller than the distance including the thickness of the cartridge and the plate thickness of the bottom plate. For example, in the case where a groove portion is provided in the cartridge, the thickness from the principal surface of the upper half or the lower half to the groove portion can be adopted, so that the thickness of the case can be set to be thin. The case of the present invention is predicated on a surface facing the bottom plate (hereinafter, referred to as a facing surface) being hollow; however, a cover covering the facing surface may be provided. When the cover is provided, in the case where the cartridge is carried around while being housed in the case, or the like, foreign matter such as dust can be suppressed from contacting the cartridge, which is preferable. However, the thinning of the case will be impaired by the thickness of the cover.

Next, the relationship between the cartridge for housing the case of the present invention and components constituting the case will be described. As described above, the factors for inserting and housing the cartridge in the case of the present invention includes the engagement and distance between the side wall of the cartridge, and the side surface of the case and/or the rib and protrusion extending from the side surface of the case. The distance relationship is as described above. Hereinafter, the engagement relationship will be described mainly.

In general, when a cartridge for housing a disk for optically recording/reproducing an information signal is mounted on a recording/reproducing apparatus, the cartridge is placed on a receiving plate called a tray. In order to exactly place the cartridge on the tray, positioning holes provided in the cartridge are engaged with convex portions of the tray, and in addition, guide concave portions are provided on both side faces on the front side of the cartridge so as to be connected to the side surface on the front side of the cartridge, whereby hooks of the tray are engaged with the guide concave portions. The first rib and the second rib in the case of the present invention are engaged with the guide concave portions immediately before the cartridge has been housed in the case. Thus, the first rib and the second rib can ensure the positioning of the cartridge after the cartridge is housed in the case.

Furthermore, due to the configuration in which the distance between the edge of the first protrusion and the side surface (hereinafter, referred to as a second side surface) with the second rib extending therefrom is substantially equal to the width of the cartridge, the edge of the first protrusion is engaged with the side end wall of the cartridge, whereby the cartridge can be positioned between the second side surface and the first protrusion, and the cartridge can be inserted in the case. Thus, for example, even in the configuration in which the cartridge has side walls in a plane shape (excluding the guide concave portion) without a groove as in the side wall on a shutter side, and even in the configuration in which the cartridge has only a side wall on one side, if the side wall in a plane shape (hereinafter, referred to as a plane side wall) without a groove except for the guide concave portion is engaged with the first protrusion, the cartridge can be housed in the case.

When a cartridge having a side wall on a shutter side on one side wall and a plane side wall on the other side wall is housed in the case having a side surface with the first protrusion and/or the second protrusion, the rack portion, and the first rib extending therefrom (hereinafter, referred to as a first side surface), it is possible to arbitrarily select whether the cartridge is housed with the shutter closed or the cartridge is housed with shutter opened, depending upon the front and back of the cartridge to be inserted. When the cartridge is housed with the shutter closed, the case can be used as an ordinary case for housing a cartridge. When the cartridge is housed with the shutter opened, for example, a disk housed in the cartridge can be cleaned. Alternatively, in the case of a cartridge from which a disk can be removed, by pressing the inner circumference of the center hole of the disk exposed when the shutter is opened, with the finger in a disk removal direction, removal of the disk can be helped. Thus, the above-mentioned configurations can be achieved easily by the user's selection.

Particularly, in the case of a combination between a case and a cartridge having a side wall on a shutter side (in which the first protrusion, the rack portion, and the second protrusion provided on the first side wall are engaged respectively with the first hole, the gear portion, and the second hole provided in the ring member engaged either the upper or lower half, whereby the shutter rotates to be opened and closed), the following function and effect are exhibited. More specifically, in the configuration in which the side wall on a shutter side is engaged with the second side surface, at a starting of cartridge insertion, the side wall on a shutter side substantially at a distance of the cartridge width slides with respect to the second side surface in a plane state, and the plane side wall contacts the second protrusion. Although the second side surface is in a plane state, it is engaged with the second protrusion in a point state, since the second protrusion is pointed. While the width direction of the cartridge is regulated, the degree of freedom with respect to the cartridge width direction also can be ensured during insertion of the cartridge. Force, attention by the user, and the like, which are unnecessary for the insertion starting operation, can be reduced. When the cartridge is being inserted, the insertion operation is allowed to proceed while the rack portion is guiding the plane side wall, and the plane side wall is engaged with the first protrusion, whereby the width direction of the cartridge and the case is defined. Then, the guide concave portions are engaged with the first rib and the second rib at an insertion completion point.

In contrast, in the configuration in which the side wall on a shutter side is engaged with the first side surface, the second protrusion is inserted in the groove of the side wall on a shutter side, whereby the second protrusion functions as a guide at an insertion starting time of the cartridge. Then, the gear portion, the first hole, and the like provided in the ring member are engaged with the rack portion and the first protrusion, whereby the insertion of the cartridge proceeds while the shutter is being opened. At an insertion completion point, the first and second ribs are engaged with the guide concave portions, in the same way as in the above.

When the third rib is provided on the second side surface in the above configuration, the plane side wall and the third rib slide to be engaged at a starting time of insertion of the cartridge, and the second protrusion is engaged with the bottom of the groove of the side wall on a shutter side. As described above, due to the shape of the second protrusion, guiding can be performed exactly when the cartridge starts being inserted, while the resistance at an insertion starting point of the cartridge is reduced. As described above, as long as the configuration is adopted in which the cartridge is inserted in the case from the side wall on a front side of the cartridge, a shutter closed state or a shutter opened state can be selected freely.

As is apparent from the above description, the height of the second rib is substantially equal to the height of the first protrusion, and the height of the third rib is substantially equal to the height of the rack portion. The height of the first rib is set to be longer than any height of the second rib, the first protrusion, the rack portion, the second protrusion, and the third rib, so that the first rib is engaged with the guide concave portion in accordance with the housing surface of the cartridge with respect to the case.

Among the above-described configurations, one embodiment exemplifying preferable configurations of a case and a cartridge to be housed of the present invention will be described with reference to the drawings.

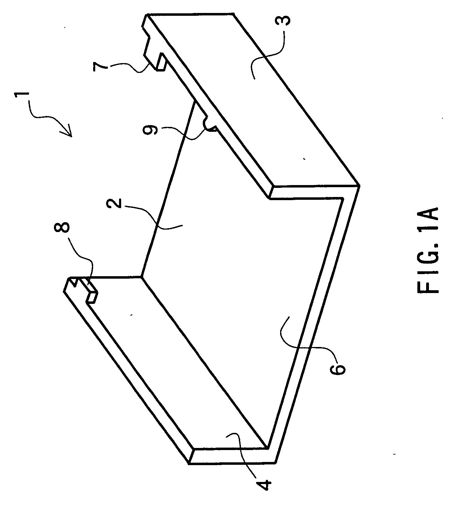

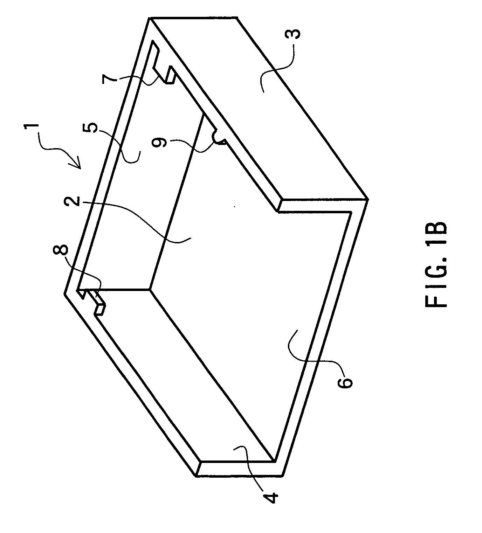

FIGS. 1A to 1D are perspective views showing configurations of a case 1 according to the present embodiment. The case 1 shown in FIG. 1A includes a first side plate 3 and a second side plate 4 respectively rising from a pair of border lines facing each other with a bottom plate 2 interposed therebetween. A first rib 7 projects, with a distance of D1 from an inner surface of the first side plate 3, from an edge of the first side plate 3 facing the bottom plate 2, and a second rib 8 projects, with a distance of D2 shorter than the distance D1, from an edge of the second side plate 4 facing the bottom plate 2. The first rib 7 and the second rib 8 are arranged respectively at positions substantially facing each other. Furthermore, on an entrance 6 side, a first protrusion 9 projects, with a distance of D3, from the inner surface of the first side plate 3 at the edge of the first side plate 3 facing the bottom plate 2. The case shown in FIG. 1B includes basically the same first rib 7, first protrusion 9, and second rib 8 as those in FIG. 1A. The case shown in FIG. 1B includes a third side plate 5 rising from the bottom plate 2 with the same extending height as those of the first side plate 3 and the second side plate 4, from the edge of the bottom plate 2 facing the entrance 6 via the bottom plate 2.

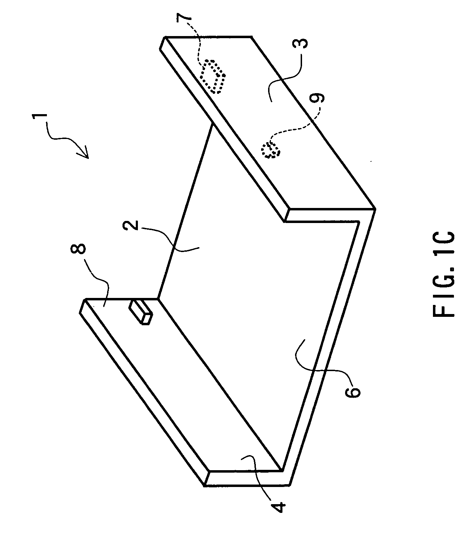

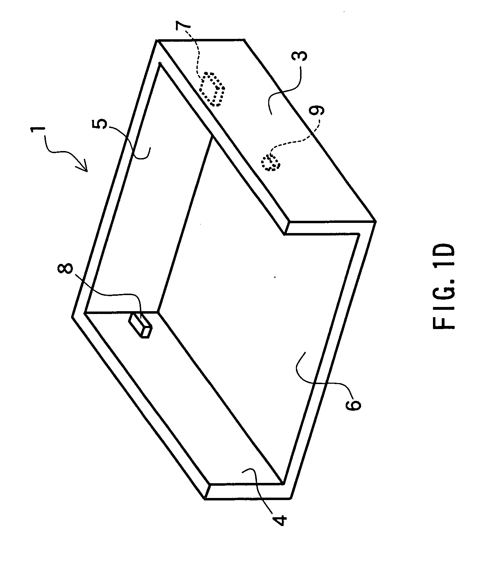

A case shown in FIG. 1C includes a first side plate 3 and a second side plate 4 respectively rising from a pair of border lines facing each other with the bottom plate 2 interposed therebetween in the same way as in the case shown in FIG. 1A. However, the case shown in FIG. 1C is different from that shown in FIG. 1A in that the respective heights of the first rib 7, the first protrusion 9, and the second rib 8 from the bottom plate 2 are at a substantially intermediate position of the first side plate 3 and the second side plate 4. Furthermore, the case shown in FIG. 1D includes the third side plate 5 rising from the bottom plate 2 with the same extending height as those of the first side plate 3 and the second side plate 4, from the edge of the bottom plate 2 facing the entrance 6 via the bottom plate 2 in the same way as in the case shown in FIG. 1B. However, the case shown in FIG. 1D is different from the case shown in FIG. 1B in that the respective heights of the first rib 7, the first protrusion 9, and the second rib 8 from the bottom plate 2 are at a substantially intermediate position of the first side plate 3 and the second side plate 4.

The basic configuration of the case of the present invention adopts the configurations shown in FIGS. 1A to 1D; however, the configuration having the third side plate 5 is more excellent in terms of the mechanical strength of the first side plate 3 and the second side plate 4, and the bottom plate 2. Furthermore, when the configuration having the third side plate 5 shown in FIG. 1B is compared with that shown in FIG. 1D, the configuration capable of accommodating the height of an insertion with an extending height of the first side plate 3 and the second side plate 4 of the case 1 from the bottom plate 2 generally is preferable as a case in most cases. Based on these two points, the case 1 shown in FIG. 1D will be exemplified, with a cartridge being the insertion.

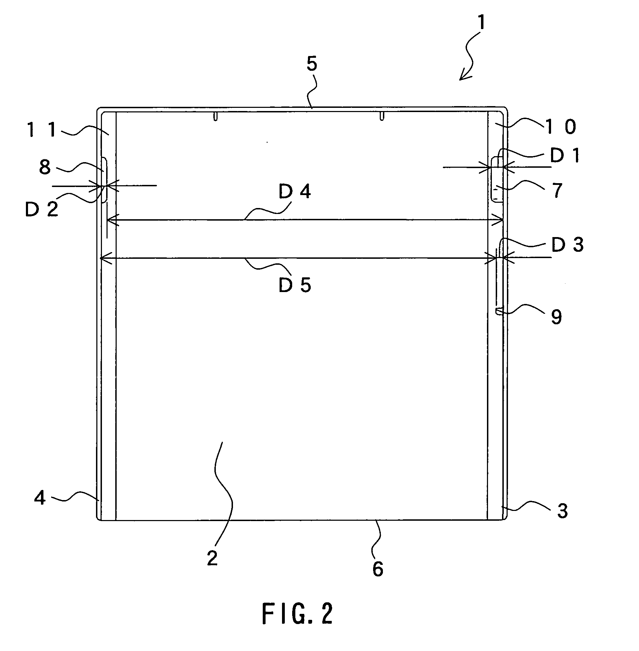

FIG. 2 is a plan view showing a configuration of the case 1 according to the present embodiment, seen from a facing surface side. The case 1 includes the bottom plate 2 in a substantially rectangular shape. The side plate 3 extends from an edge of the bottom plate 2. The side plate 4 extends from the other edge facing the edge of the bottom plate 2, so that the side plate 4 faces the side plate 3. The side plate 5 extends so as to be connected to the side plate 3 and the side plate 4 at an edge perpendicular to the above-mentioned edges of the bottom plate 2.

The entrance 6 for inserting a cartridge (described later) is formed of the side plates 3 and 4, and the bottom plate 2 on an edge opposite to the edge where the side plate 5 of the bottom plate 2 is provided.

The rib 7 having an edge parallel to an inner surface of the side plate 3 is provided on an inner surface of the side plate 3 with the height D1 between the inner surface of the side plate 3 and the top face of the rib 7. On the inner surface of the side plate 4, the rib 8 having an edge parallel to the inner surface of the side plate 4 is provided so as to face the rib 7 with the height D2 shorter than the height D1. On the inner surface of the side plate 3 on the entrance 6 side with respect to the rib 7, the protrusion 9 having an edge parallel to the inner surface of the side plate 3 is provided with the height D3 shorter than the height D1.

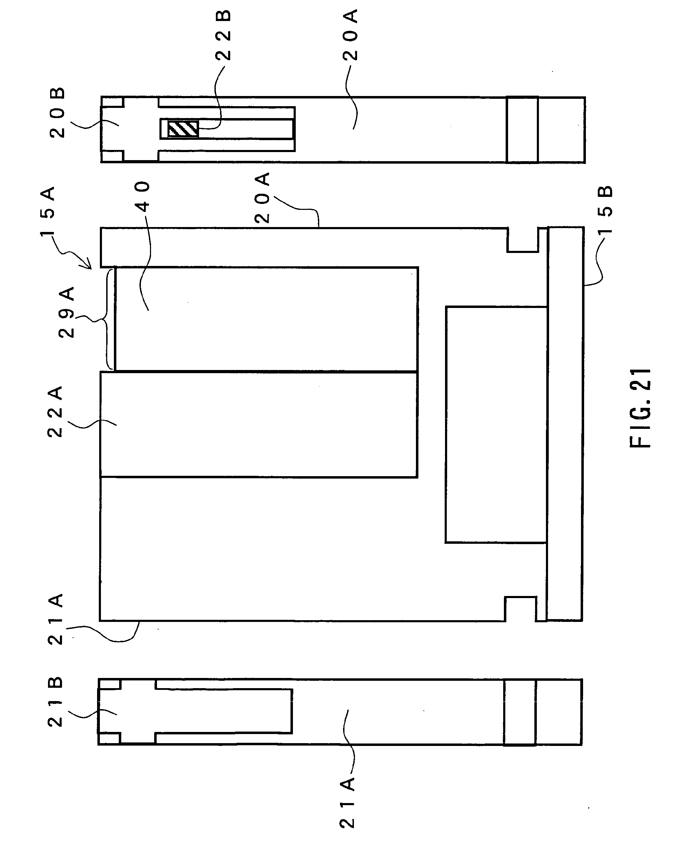

A spatial distance D4 between the top face of the rib 8 and the inner surface of the side plate 3, and a spatial distance D5 between the edge of the protrusion 9 and the inner surface of the side plate 4 are substantially equal to a width of a cartridge 15A shown in FIG. 21 in a direction orthogonal to the insertion direction in which the cartridge 15A is inserted through the entrance 6.

The cartridge 15A houses, for example, a disk capable of recording only once, called a phase-change type write-once, a magneto-optical disk, etc. in its body. The cartridge body has a shutter 22a provided slidably. The shutter 22A slides an open range 29A, thereby opening an opening window portion (not shown); consequently, a disk (not shown) is exposed. The cartridge body has a pair of side walls 20A and 21A facing each other. In the side wall 20A, a groove 20B is formed partially on a front wall side, and in the side wall 21A, a groove 21B is formed partially on a front wall side. In addition, there is provided a shutter engagement portion 22B that opens the shutter 22A by sliding toward a back wall 15B on a facing surface facing a surface to be engaged with the shutter 22A of the cartridge 15A.

In order to insert the cartridge 15A into the case 1 thus configured, the side walls 20A and 21A in the width direction of the cartridge are engaged with the side plates 3 and 4, and inserted toward the side plate 5, from the entrance 6. Due to the above-mentioned size relationship, at a starting time of insertion of the cartridge 15A into the case 1, the cartridge 15A is inserted into a gap between the side surface 3 and the side surface 4. Therefore, the cartridge 15A slides to be engaged with the bottom plate 2; however, unless the insertion direction is tilted in either one of the directions of the side plates 3 and 4, the side walls 20A and 21A are not engaged with the side plates 3 and 4 simultaneously. Thus, at a starting time of insertion, there is a gap between the side plates 3 and 4 of the case 1, and the side walls 20A and 21A in the width direction of the cartridge 15A.

When the insertion of the cartridge 15A is allowed to proceed, and the side wall 20A of the cartridge 15A reaches the protrusion 9 extending from the side plate 3, since the distance D5 between the protrusion 9 and the side plate 4 is substantially equal to the width of the cartridge 15A, the side wall 20A of the cartridge 15A facing the side plate 3 and the side wall 21A of the cartridge 15A facing the side plate 4 are engaged with the side plates 3 and 4 simultaneously. Although the engagement between the side plate 4 and the side wall 21A of the cartridge 15A is a plane state, the engagement between the protrusion 9 and the side wall 20A of the cartridge 15A is close to a point state. Therefore, the cartridge 15A rotates in a direction orthogonal to the insertion direction of the cartridge 15A with respect to the engagement point. The protrusion 9 extends at a substantially center portion in a vertical direction of the side plate 3. Therefore, the degree of freedom with respect to the rotation is reduced at a portion of the cartridge 15A inserted into the case 1, and the cartridge 15A in the case 1 can be positioned in the width direction so that the side wall 21A of the cartridge 15A and the side plate 4 can slide to be engaged with each other. The insertion operation proceeds while the side wall 21A of the cartridge 15A and the side plate 4 slide to be engaged, and the protrusion 9 is engaged with the shutter engagement portion 22B. The shutter engagement portion 22B slides toward the back wall 15B in accordance with the insertion operation of the cartridge 15A into the case 1, and the shutter 22A moves to the shutter open range 29A, whereby the opening window portion of the cartridge 15A is opened. Immediately before the completion of insertion, the first rib and the second rib 8 are engaged respectively with guide concave portions 20B and 21B of the cartridge 15A, whereby the cartridge 15A is housed completely. In a state where the cartridge 15A is housed completely, the shutter 22A of the cartridge 15A is opened, and a part of the disk housed in the cartridge 15A is exposed from an opening window portion. Therefore, disk cleaning for removing foreign matter such as dust, fingerprints, etc. adhering to the disk can be performed.

In the case 1 having the above-mentioned configuration, if at least one of the side walls 20A and 21A of the cartridge 15A is a plane side wall, the same insertion operation as described above can be realized by insertion with the plate side wall (21B in the present embodiment) positioned on the side plate 3 side. For example, in a cartridge in which a full-length stepped groove having a step over the entire length of a side wall on the shutter side having the shutter engagement portion 22B is provided on one side wall, and a full-length stepped groove having no shutter engagement portion 22b is provided on the other side wall, the extending position of the protrusion 9, for example, may be biased in the thickness direction of the side plate 3 so that the protrusion 9 is not buried in the full-length stepped groove. Furthermore, when the step portions 10 and 11 are provided in the vicinity of the extending positions of the side plates 3 and 4 from the bottom plate 2 as shown, a cartridge side wall can be engaged between the rib 7 and/or the protrusion 9, and the step portion 10, and between the rib 8 and the step portion 11. Therefore, for example, the cartridge after being housed can be suppressed from coming off from the case 1, and the friction force generated when any of an upper half and a lower half of the cartridge engaged with the bottom plate 2 slides in a plane state with respect to the entire surface of the bottom plate 2 can be reduced.

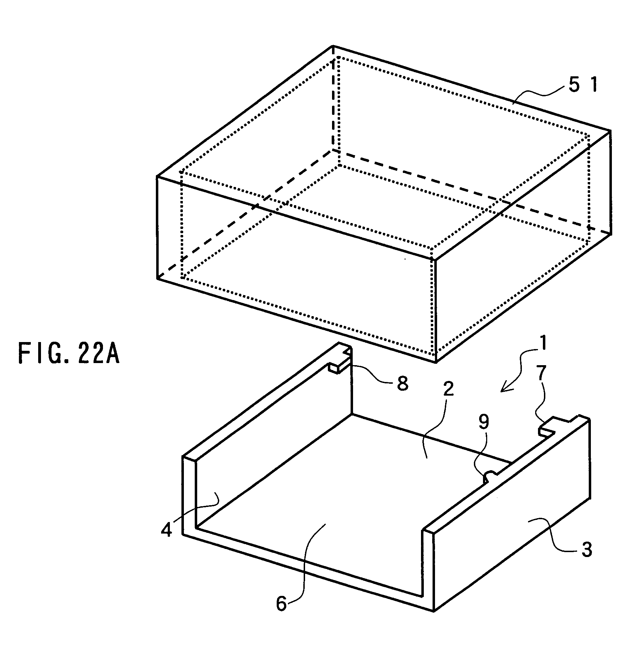

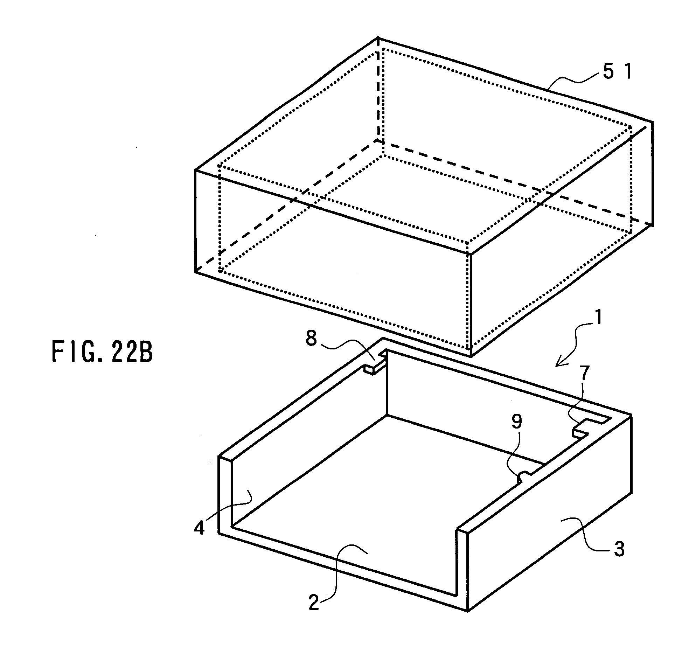

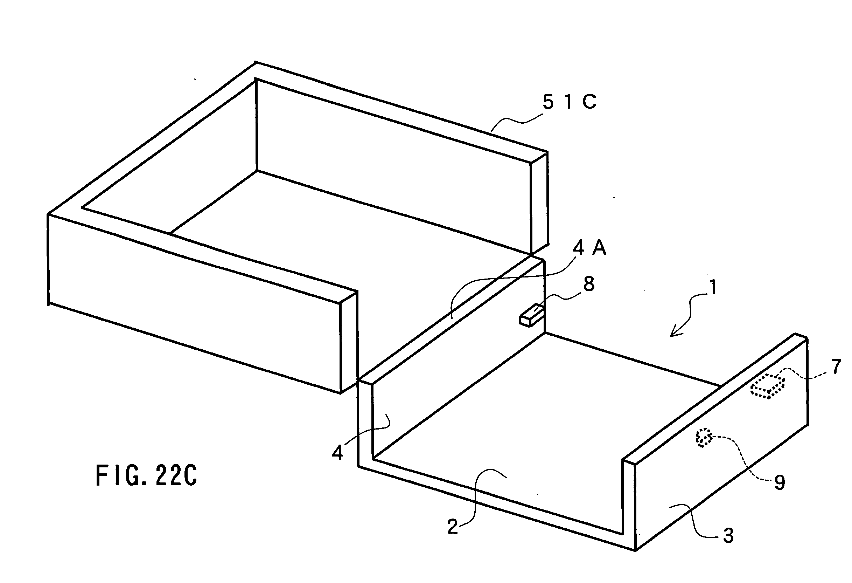

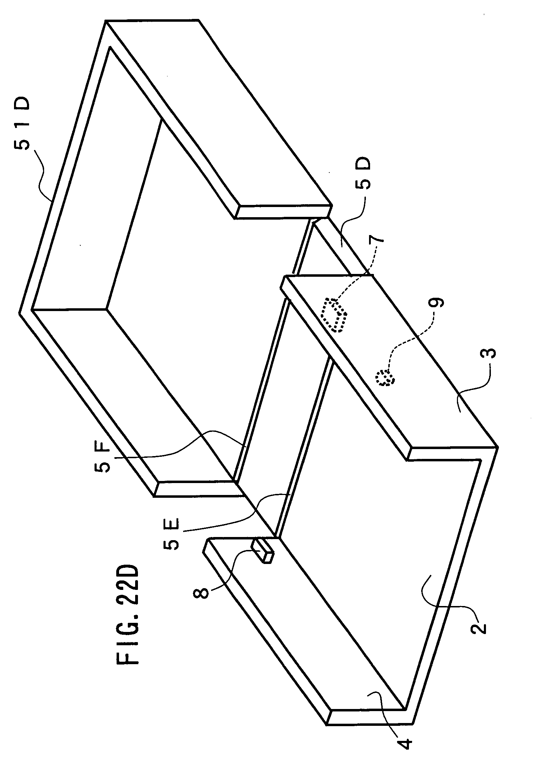

FIG. 22A is a perspective view showing a cover of the case according to the present embodiment. A cover 51 has a substantially hollow rectangular shape that opens toward the case 1 so as to cover the entire case 1. The cover 51 is provided separately from the case 1. FIG. 22B is a perspective view showing another cover of the case according to the present embodiment. The configuration shown in FIG. 22B is the same as that shown in FIG. 22A, except that the side plate 5 is provided at the case 1.

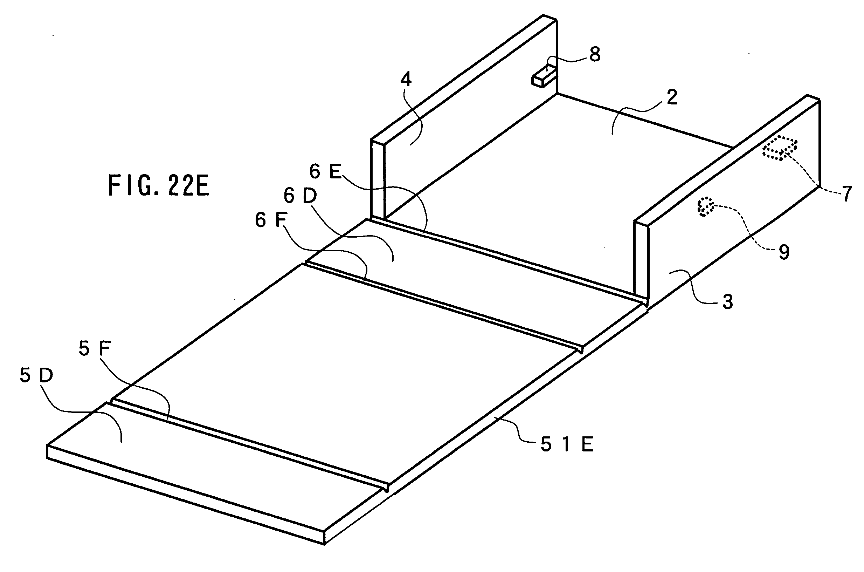

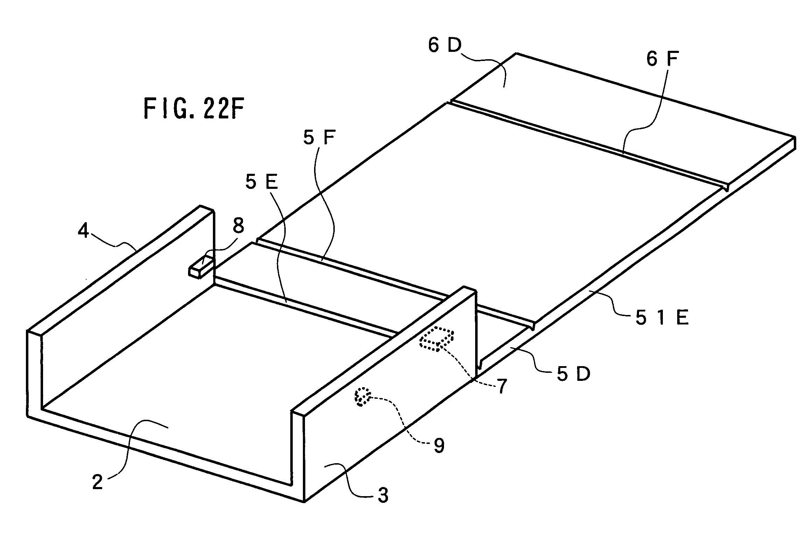

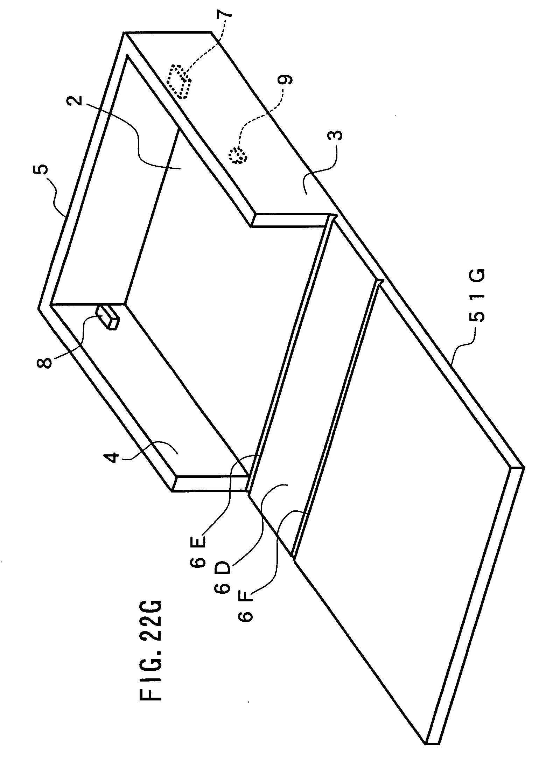

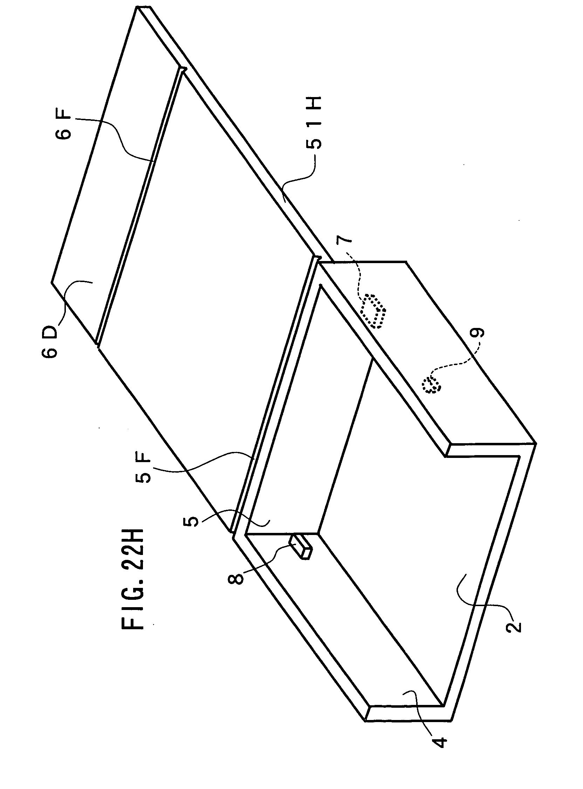

FIG. 22C is a perspective view showing another cover 51C of the case according to the present embodiment. The cover 51C is provided rotatably so as to cover the entire case around a hinge 4A provided with a rotation axis on an edge of the side plate 4. FIG. 22D is a perspective view showing another cover 51D of the case according to the present embodiment. The cover 51D is provided rotatably so as to cover the entire case, with a hinge 5D being adjusted in a range surrounded by the bottom plate 2, and the side plates 3 and 4. FIG. 22E is a perspective view showing another cover 51E of the case according to the present embodiment. The cover 51E is provided rotatably so as to cover the entire case by rotating around a hinge 6E having a rotation axis at one end of the bottom plate 2 on the entrance side opposite to the ribs 7 and 8, thereby closing with a plate portion 6D, and rotating around hinges 6F and 5F, thereby closing the side having the ribs 7 and 8 with a plate portion 5D. FIG. 22F is a perspective view showing another cover 51E of the case according to the present embodiment. The cover 51E is provided rotatably so as to cover the entire case by rotating around a hinge 5E having a rotation axis at one end of the bottom plate 2 on the ribs 7 and 8 side, thereby closing with the plate portion 5D, and rotating around the hinge 5F and 6F, thereby closing the entrance on the opposite side of the ribs 7 and 8. FIG. 22G is a perspective view showing another cover 51G of the case according to the present embodiment. The cover 51G is provided rotatably so as to cover the entire case by rotating around the hinge 6E having a rotation axis at one end of the bottom plate 2 on the entrance side opposite to the side plate 5, thereby closing the entrance with the plate portion 6D, and rotating around the hinge 6F. FIG. 22H is a perspective view showing another cover 51H of the case according to the present embodiment. The cover 51H is provided rotatably so as to cover the entire case around the side plate 5.

The covers shown in FIGS. 22C to 22H are configured so as to have rotation axes of the covers as the hinges. Therefore, there is an advantage that the configuration is simple. In view of the insertion operation, in the configuration shown in FIG. 22C, the cover is an obstacle for an insertion operation, whereas in the other configurations shown in FIGS. 22D to 22H, the covers are not obstacles for the insertion operation. In the configuration shown in FIG. 22D, the case itself is enlarged as shown in FIGS. 22A and 22B. The configurations shown in FIGS. 22E and 22F are not obstacles for the insertion operation; however, the mechanical strength of the first side plate 3 and the second side plate 4 is degraded. Thus, although the configuration shown in FIG. 22G is most preferable, it is possible to select a configuration appropriately in accordance with the preference. Furthermore, the first rib 7, the protrusion 9, and the second rib 8 are configured within the height of the side plate. However, they may be provided on the top portion of the side plate as in the configurations shown in FIG. 22A or FIG. 22B.

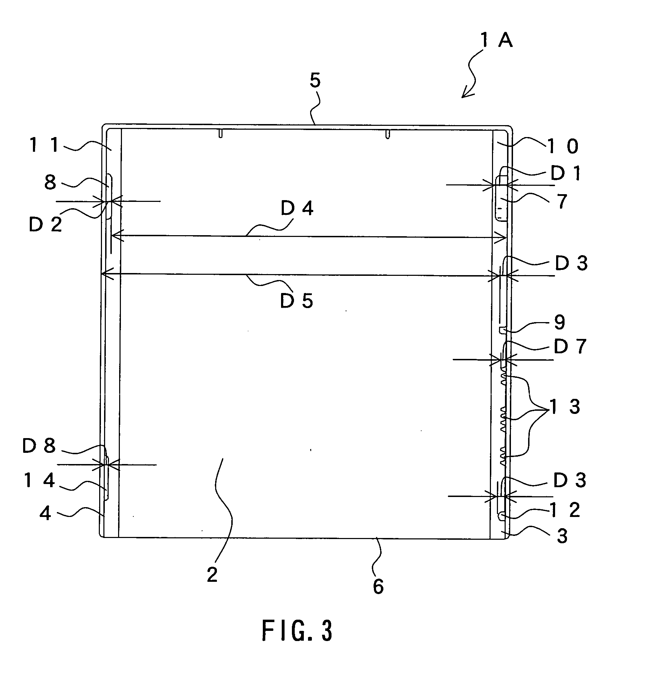

FIG. 3 is a plan view showing the configuration of another case 1A according to the present embodiment, seen from a facing surface side. Elements having the same functions as those in FIGS. 1D and 2 are denoted with the same reference numerals as those therein, and the description thereof will be omitted basically.

In FIG. 3, newly added elements are a protrusion 12, a rack 13, and a rib 14. As shown in FIG. 3, the side plate 3 with the rib 7 and the protrusion 9 extending therefrom is provided with the protrusion 12 on the entrance 6 side with respect to the protrusion 9, and the rack 13 having a predetermined pitch is provided between the protrusions 9 and 12. The rib 14 extends on the entrance 6 side of the side plate 4 with the rib 8 extending therefrom, and on the rib 8 side with respect to the position where the protrusion 12 faces the side plate 4.

Furthermore, the height of the protrusion 12 is the same as the height D3 of the protrusion 9. The height D7 on the top of the rack 13 is shorter than the height D3 (i.e., this also applies to the height D3 of the protrusion 12) of the protrusion 9. The height D8 of the rib 14 is shorter than the height D2 of the rib 8.

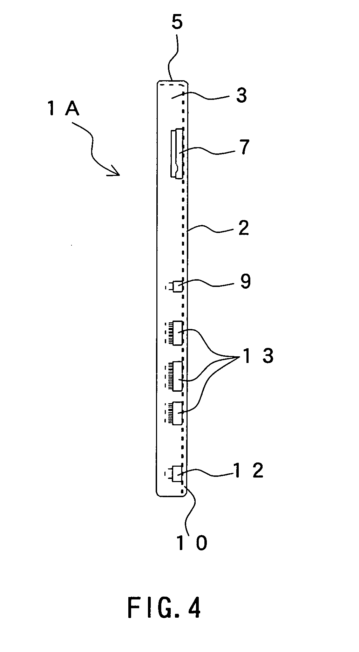

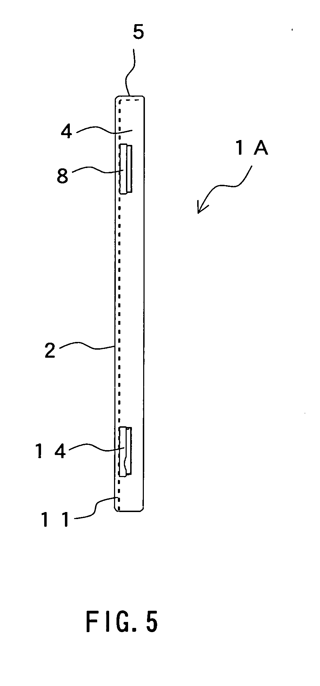

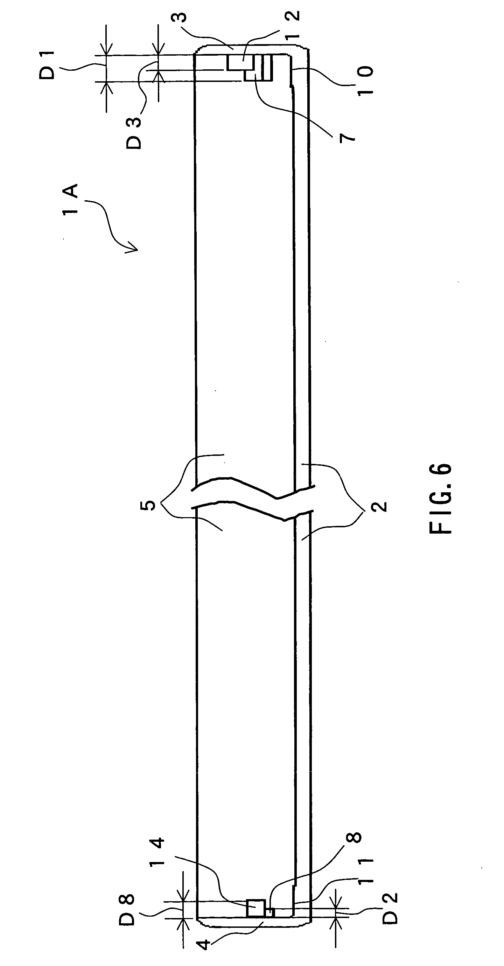

FIG. 4 shows a side view seen from the side plate 3 side, showing a positional relationship regarding the side plate 3 with the rib 7, the protrusion 9, the rack 13, and the protrusion 12 extending therefrom. FIG. 5 shows a positional relationship regarding the side plate 4 with the ribs 8 and 14 extending therefrom. FIG. 6 shows a positional relationship of the rib 7, the protrusion 12 (the protrusion 9 and the rack 13 are overlapped on a back surface of the protrusion 12), the rib 8, and the rib 14 with respect to the side plates 3 and 4, seen from the entrance 6.

As shown in FIGS. 4 and 5, the rib 7, the protrusion 9, the rack 13, the protrusion 12, the rib 8, and the rib 14 are configured respectively in two stages, and each thickness is configured substantially equal to each other. Furthermore, as shown in FIG. 6, the distances of the bottom surface of the rib 7 and the bottom surface of the rib 8 from the bottom plate 2 are substantially the same, and the distances of the lower surface of the protrusion 12 (protrusion 9, rack 13) and the lower surface of the protrusion 14 from the bottom plate 2 are substantially the same. Furthermore, the protrusions forming guide concave portions of the cartridge are fitted between the surfaces of the step portions 10 and 11, and the lower surfaces of the ribs 7 and 8, whereby the cartridge can be engaged with the case 1.

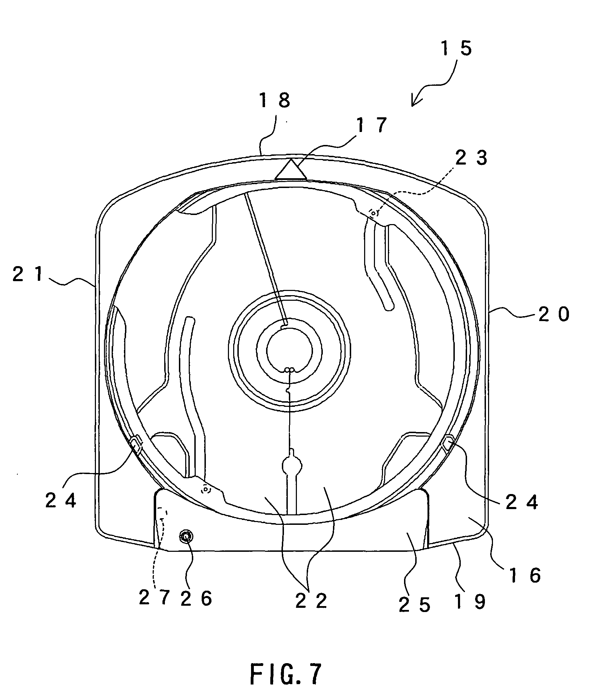

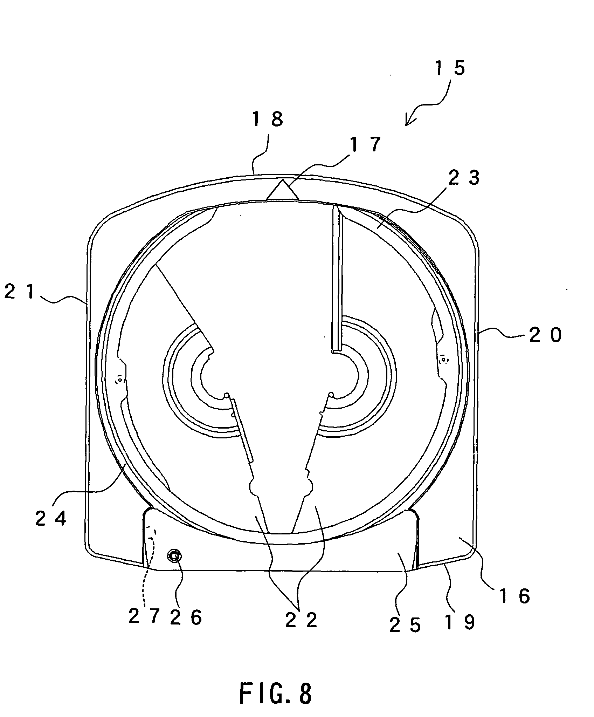

Next, the cartridge used in the present embodiment will be described. FIGS. 7 and 8 are plan views of main portions showing only the upper half 16 of the cartridge 15 and the shutter 22. In FIGS. 7 and 8, the cartridge 15 includes a cartridge insertion direction designating portion 17 for designating the direction in which the cartridge 15 is inserted into a recording/reproducing apparatus and the case 1, a side wall on a front side 18 forming a side wall of the cartridge in the direction in which one cartridge is inserted, a side wall on a back side 19 opposite to the side wall on a front side 18, and a pair of side walls 20 and 21 of the cartridge 15 facing each other.

The side wall 20 is a side wall on the shutter side for housing a shutter engagement portion causing the opening and closing operation of the shutter 22 in a full-length stepped groove, and the side wall 21 is a partial stepped groove side wall provided with guide concave portions connected from the side wall on a front side 18

The cartridge 15 is provided with a ring member 23 that is engaged with the shutter 22 to control the opening and closing of the shutter 22 by rotation. The shutter 22 and the ring member 23 are engaged with a lower half 28 (described later). The cartridge 15 has a disk pressure portion 24 for pressing and holding a disk 40 (described later) when the shutter 22 is closed. The disk pressure portion 24 is formed on an outer circumferential surface of the shutter 22.

In order to remove the disk housed in the cartridge 15, a door 25 is provided in the vicinity of the side wall on a back side of the upper half 16, and a history designating portion 26 for designating the history of evacuation of the door 25 and a door rotation axis 26 for evacuating the door 25 after the history designating portion 26 is removed are provided on the lower half.

FIG. 7 shows a state where the shutter 22 is closed, and FIG. 8 shows a state where the shutter 22 is opened. The disk pressure portion 24 enters between the upper half 16 and the lower half 28 in accordance with the opening operation of the shutter 22, whereby the disk 40 can be pulled out when the shutter 22 is opened.

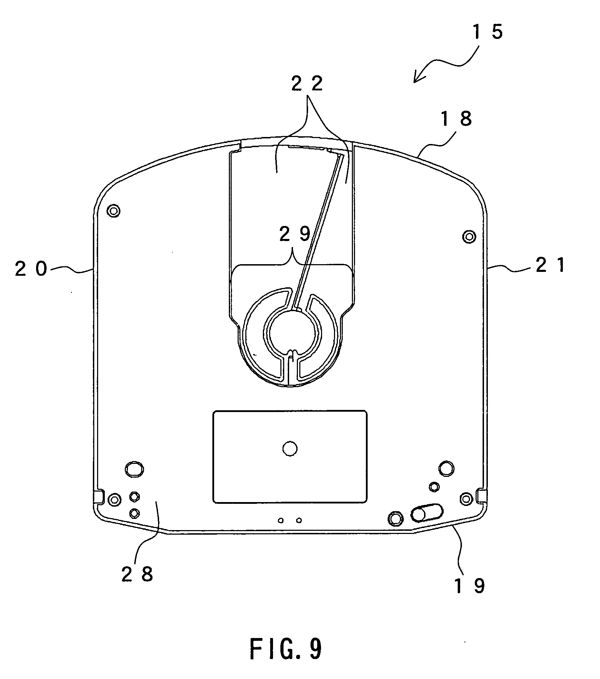

FIG. 9 is a plan view showing the state shown in FIG. 7 seen from the lower half 28 side. In the lower half 28, an opening window portion 29 for exposing a part of the disk 40 is formed.

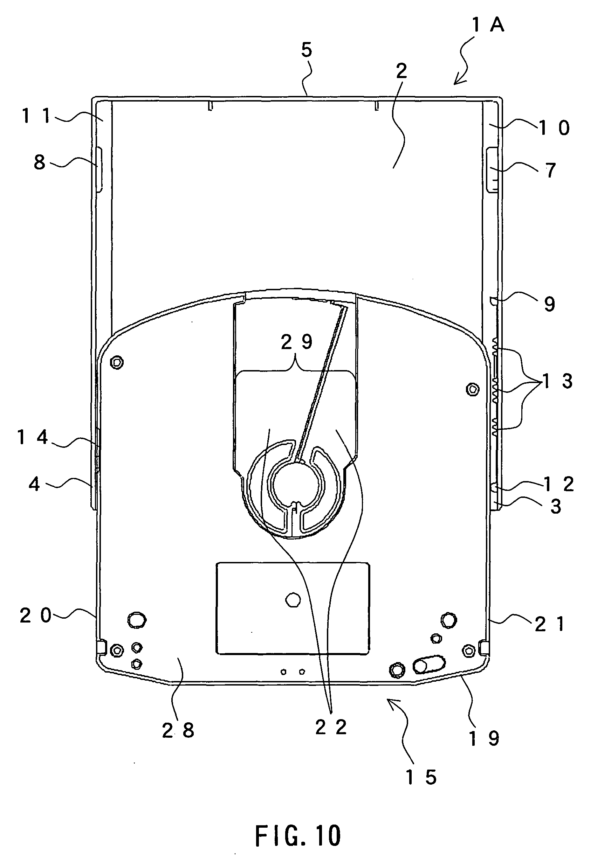

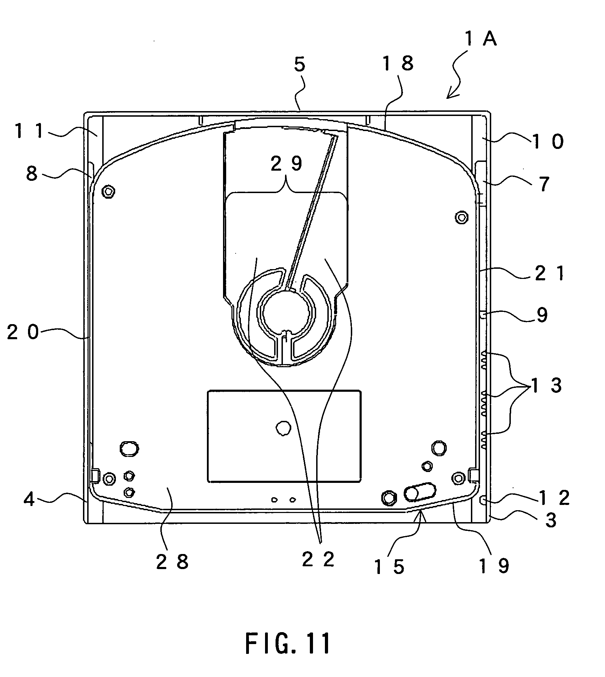

Next, the process of housing the cartridge 15 in the case 1 will be described. FIGS. 10 and 11 show the state where the cartridge 15 is housed in the case 1A under the condition that the upper half 16 faces the bottom plate 2.

When the cartridge 15 starts being housed in the case 1A, as shown in FIG. 10, the protrusion 12 provided on the side plate 3 of the case 1A is engaged with the partial stepped groove side wall 21 of the cartridge, and the rib 14 provided on the side plate 4 enters the full-length stepped groove, so that the side plate 4 of the case 1A and the side wall on a shutter side 20 of the cartridge 15 slide to be engaged with each other in a plane state.

As described above, the spatial distance D5 between the top of the protrusion 12 and the side plate 4 is substantially equal to the width of the cartridge 15. Therefore, the cartridge 15 and the case 1 are positioned in the width direction substantially at a starting point of the housing. The protrusion 12 and the partial stepped groove side wall 21 are engaged with each other substantially in a point state. Therefore, when the cartridge 15 starts being housed in the case 1A, the cartridge 15 can be rotated in a direction orthogonal to the insertion direction with respect to the engagement in a point state. Therefore, the insertion direction of the cartridge 15 can be corrected at the starting point of the housing.

Furthermore, the rib 14 is buried in the full-length stepped groove, so that a gap is formed between the rack 13 and the partial stepped groove side wall 21. Therefore, the partial stepped groove side wall 21 is prevented from sliding to be engaged to damage the top of the rack 13.

FIG. 11 shows a state where the cartridge 15 has been housed in the case 1. In FIG. 11, the contact engagement between the protrusion 12 and the partial stepped groove side wall 21 is removed; however, the protrusion 9 contacts to be engaged with the partial stepped groove side wall 21.

Thus, when the cartridge 15 is housed under the condition that the upper half 16 faces the bottom plate 2, the width of the cartridge 15 is regulated by the contact engagement by the protrusion and planar engagement from the starting of housing to the completion of housing; therefore, the cartridge 1 can be prevented from swaying in the width direction upon the insertion operation to cause useless resistance, thereby damaging the cartridge 15 and/or the case 1A.

When the cartridge 1 has been housed in the case 1A, the ribs 7 and 8 are engaged respectively with guide concave portions (not shown), whereby the insertion position of the side plate on a front side 5 and the side wall on a front side 18 can be defined. In addition, as a result of the engagement of the rib 7 with the guide concave portion, as well as the contact engagement between the partial stepped groove side wall 21 and the protrusion 9, noise generated when the partial stepped groove side wall 21 side of the housed cartridge 15 vibrates vertically to contact the bottom plate 2 can be suppressed. Damage to the cartridge 15 and/or the case 1A also can be suppressed.

Furthermore, by providing the step portions 10 and 11, a roof forming a guide back portion can be fitted between the step portion 10 and the rib 7, and between the step portion 11 and the rib 8, and the cartridge 15 can be engaged with the case 1A.

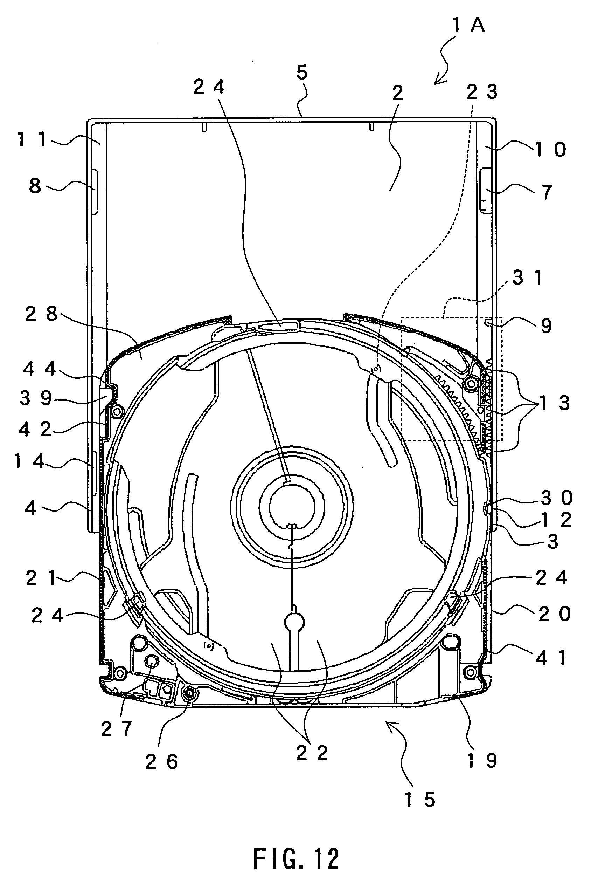

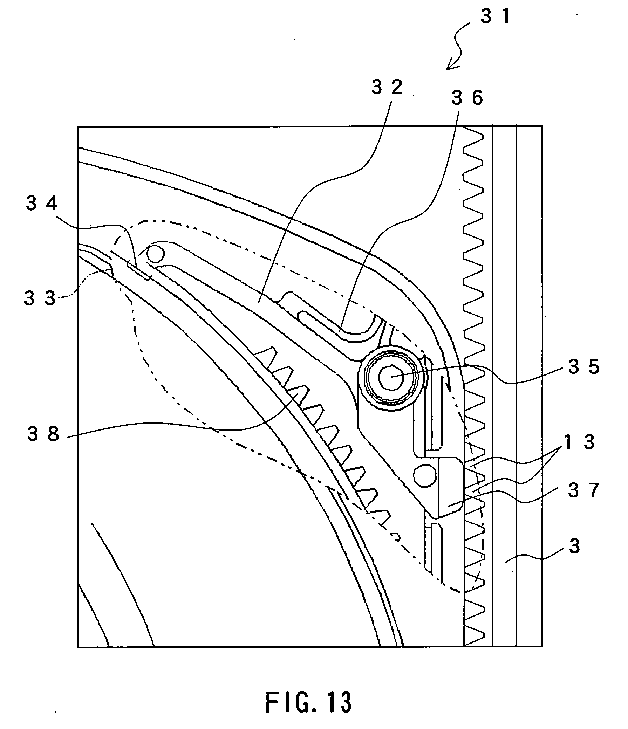

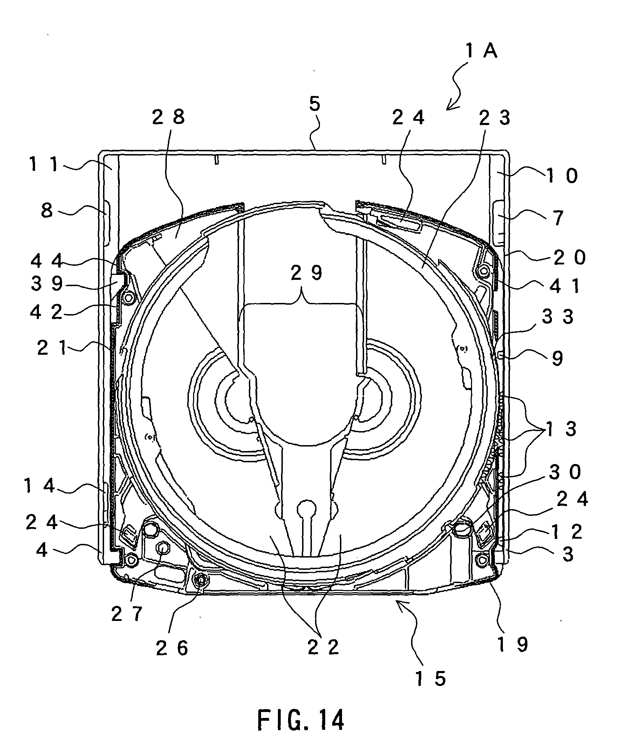

Next, the process of housing the cartridge 15 in the case 1A when the bottom plate 2 faces the lower half 28 will be described. FIGS. 12 and 14 illustrate the process of housing the cartridge 15 in the case 1A only with the lower half 28. FIG. 13 is a partial enlarged view of an opening and closing engagement portion 31 (described later).

When the lower half 28 faces the bottom plate 2, the partial stepped groove side wall 21 faces the side plate 4, and the side wall on a shutter side 20 faces the side plate 3. In FIGS. 12 and 14, reference numeral 30 denotes a second hole formed in the ring member 23, 41 denotes a full-length stepped groove portion, 42 denotes a partial stepped groove portion, and 39 denotes a guide portion assisting in the insertion operation of the cartridge 15 by being engaged with a guide concave portion 44. The shutter 22 opens the opening window portion 29, when the ring member 23 is engaged with the protrusion 12, the rack 13, the protrusion 9, and the rib 7 provided on a first side surface 20. The engagement relationship of these elements will be described in detail in FIG. 13.

In FIG. 13, reference numeral 32 denotes an opening and closing engagement member. The opening and closing engagement member 32 is composed of a first hole 33 formed in the ring member 23, a rotation suppressing portion 34 for suppressing the rotation with respect to the moving sealing member 23, a rotation member biasing portion 36 for allowing the rotation suppressing portion 34 to bias a rotation force with respect to a rotation member rotation axis 35 to the first hole 33, and an engagement removal portion for removing the engagement of the rotation suppressing member 34 with respect to the first hole 33 around the rotation member rotation axis 35.

First, as shown in FIGS. 12 and 13, when the projecting portion 12 is engaged with the second hole 30, the top of the rack 13 contacts the engagement removal portion 37 (FIG. 13), whereby the opening and closing engagement member 32 (FIG. 13) rotates around the rotation member rotation axis 35 (FIG. 13) against the bias force of the rotation member biasing portion to remove the engagement between the rotation suppressing portion 34 and the first hole 33, thereby starting the rotation of the ring member 23.

In synchronization with the start of rotation of the ring member 23, three disk pressure portions 24 provided at an end portion of the shutter 22 start rotating, thereby removing the pressure with respect to the disk 40. Thereafter, the gear 38 and the rack 13 provided in the ring member 23 are engaged with each other, whereby the shutter 22 starts opening. As shown in FIG. 14, the protrusion 9 is engaged with the first hole 33 formed in the ring member 23, whereby the opening operation of the shutter 22 is completed (FIG. 14 shows a state immediately before the engagement between the protrusion 9 and the first hole 33, instead of a state where the opening operation of the shutter 22 has been completed).

On the other hand, since the partial stepped groove side wall 21 and the side plate 4 are provided with a gap as shown, the width direction of the cartridge 15 cannot be regulated strictly. For example, by providing a guide portion 39 that is engaged with the guide concave portion 44, the cartridge 15 and the case 1A can be regulated in the width direction. When the insertion of the cartridge 15 is allowed to proceed further from the state shown in FIG. 14, the rib 8 is engaged with the partial engagement groove portion 42, and the rib 7 is engaged with a plane formed by the full-length stepped groove 41 and the side wall on a shutter side 20, whereby the housing of the cartridge 15 is completed. The functions of the ribs 7 and 8 under the condition that the cartridge 15 has been housed are the same as those in FIG. 11, and the functions of the step portions 10 and 11 also are the same as those in FIG. 11.

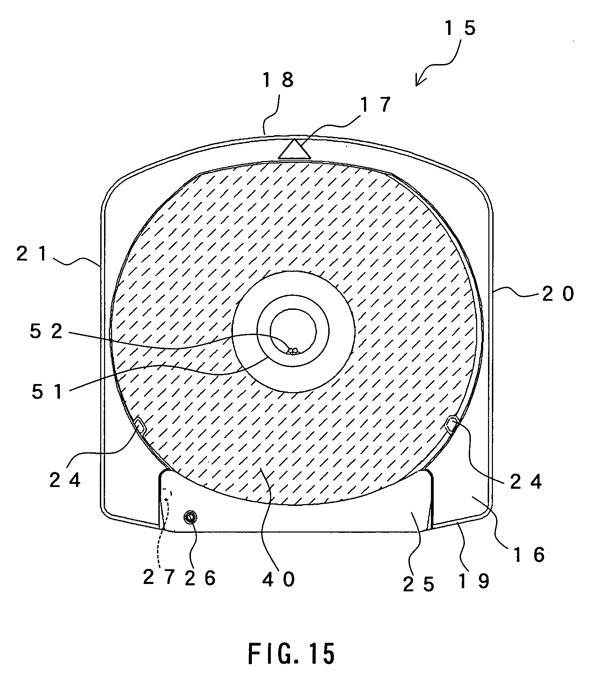

Next, the relationship between the cartridge 15 and the disk 40 according to the present embodiment will be described. FIG. 15 is a plan view of the cartridge 15 in which substantially the entire surface of the disk 40 can be visually recognized from an exposure hole formed in the upper half 16.

The upper half 16 is provided with a door 25 obtained by partially cutting away the side wall on a back side 19 of the upper half 16. The door 25 is provided with the history designating portion 26 designating the presence/absence of the history regarding the opening of the door 25. The upper half 16 is provided with a door rotation axis 27 for evacuating the door 25 by rotation.

A circular disk center hole 51 is formed at the center of the disk 40. A shutter center hole projecting portion 52 is formed at the center of the shutter 22. When the shutter 22 is closed completely, as shown in FIG. 7, the shutter center hole projecting portion 52 is positioned inside of the disk center hole 51. The shutter center hole projecting portion 52 moves from the inside of the disk center hole 51 to the position facing the surface of the disk 40, in accordance with the rotation of the shutter 22 as shown in FIG. 8.

When the shutter 22 is closed, the disk 40 is pressed by the disk pressure portion 24 as described above. Therefore, even if the engagement between the history designating portion 26 and the lower half 28 is removed to open the door 25, the disk 40 cannot be removed.

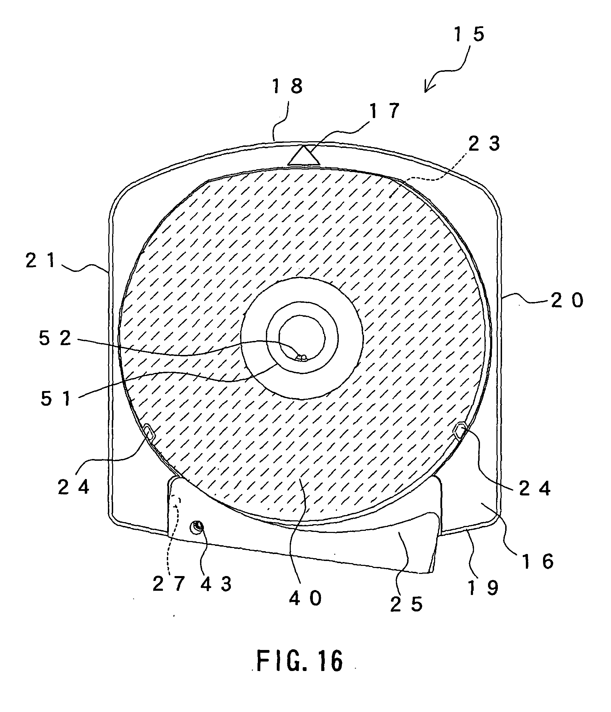

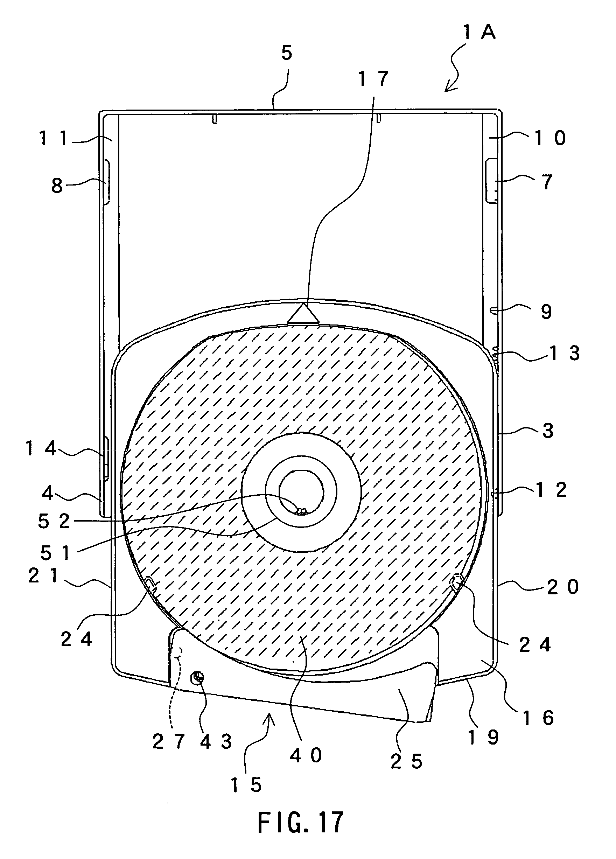

As shown in FIG. 16, after the engagement between the history designating portion 26 and the lower half 28 is removed to form the history designating hole 43, the door 25 is rotated around the door rotation axis 27, and under this condition, the shutter 22 is opened, whereby the engagement between the disk pressure portion 24 and the disk 40 is removed as described above. Therefore, the disk 40 can be taken out. When the case 1A according to the present embodiment is used, by housing the cartridge 15 in the case 1A, the disk 40 can be removed from the case 1A. This operation will be described with reference to FIGS. 17 to 20.

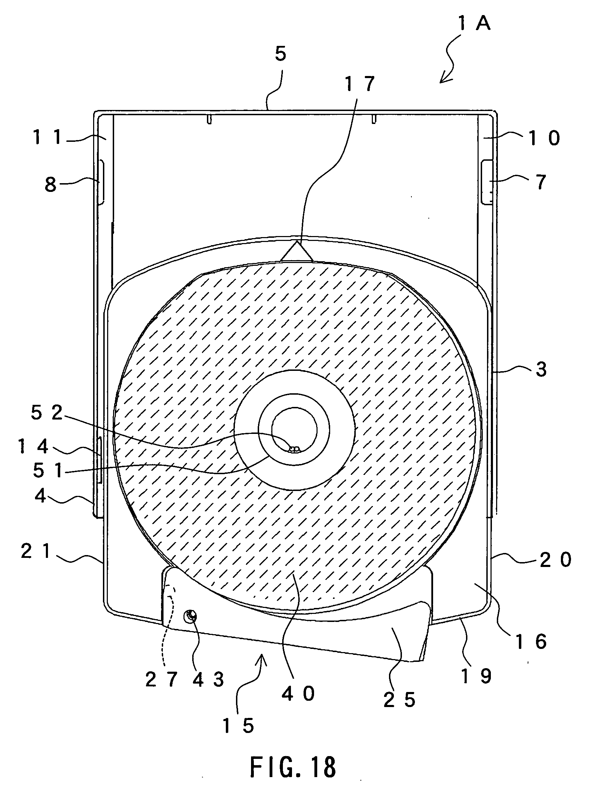

FIG. 17 illustrates a state where the cartridge 15 starts being housed in the case 1A in the state shown in FIG. 16. FIG. 17 corresponds to FIG. 12. When the cartridge 15 is inserted into the case 1A from the state shown in FIG. 17 to the state shown in FIG. 18, the engagement between the first hole 33 (FIG. 13) and the rotation suppressing portion 34 (FIG. 13) is removed, and the pressure engagement of the disk pressure portion 24 with respect to the disk 40 is removed prior to the opening of the shutter 22.

Since the shutter 22 is being opened, the disk pressure portion 24 is covered with the upper half 16; however, the shutter center hole projecting portion 52 is present in the disk center hole 51.

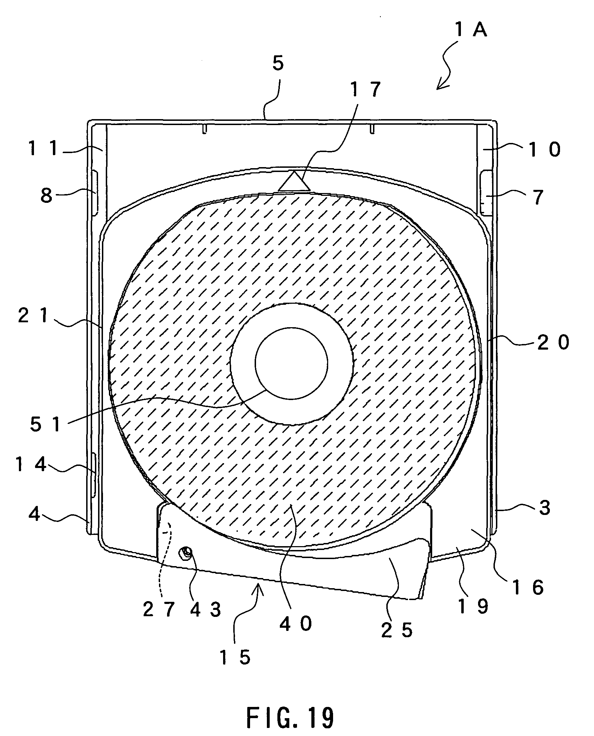

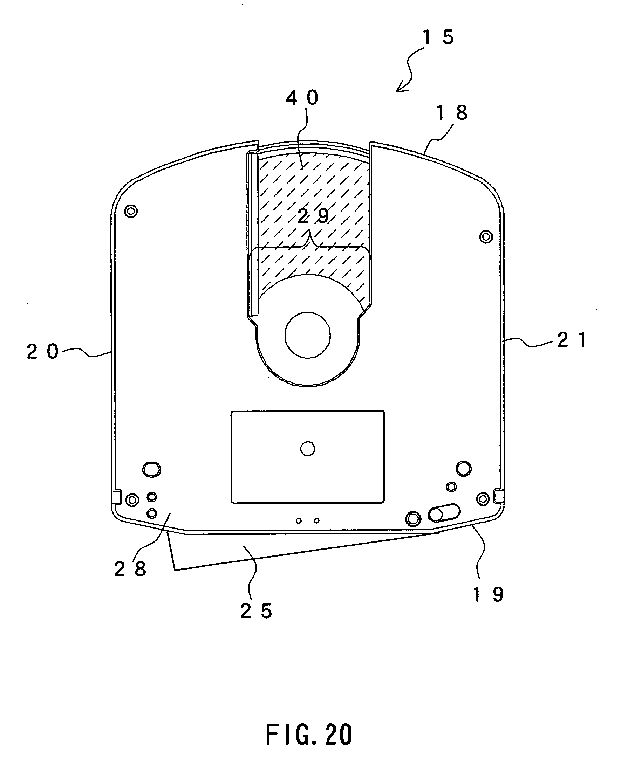

Thereafter, as shown in FIG. 19, when the insertion of the cartridge 15 into the case 1A is allowed to proceed, the rack 13 and the gear 38 are engaged with each other, whereby the shutter 22 is substantially opened as illustrated in FIG. 14. When the shutter 22 remains opened, the shutter center hole projecting portion 52 is covered with the disk 40. When the insertion of the cartridge 15 is allowed to proceed further from the state shown in FIG. 19, and the cartridge 15 has been housed in the case 1A, a finger or the like is inserted into the center hole of the disk 40, the disk 40 is grabbed with the center hole of the disk 40 and the outer circumference on the door 25 side of the disk 40, whereby the disk 40 can be removed from the cartridge 15 housed in the case 1A. FIG. 20 is a plan view showing a state where the cartridge 15 has been housed in the case 1, seen from the bottom plate 2 side. As shown in FIG. 20, as a result of the opening of the shutter 22, the disk 40 is partially exposed from the opening window portion 29.

The configuration has been described above, in which the disk 40 is taken out after the cartridge 15 has been housed in the case 1A. For example, even in the state immediately before the cartridge 15 has been housed in the case 1A, shown in FIG. 19, the disk 40 can be removed from the cartridge 15. However, considering the possibility that fingerprints adhere to the disk 40, it is preferable that the cartridge 15 is housed in the case 1A, and then, the disk 40 is removed from the cartridge 15 under the condition that the case 1A is engaged with the cartridge 15.

Furthermore, in the above-mentioned description, the configuration has been described in which the door 25 is previously opened, and then is inserted in the case 1A. In the course of the insertion of the cartridge 15 in the case 1A, or after the cartridge 15 has been housed in the case 1A, the door 25 may be opened.

Furthermore, in the above-mentioned embodiment, the cartridge 15 has been described, having a configuration in which the shutter 22 is provided in the lower half 28. However, the shutter 22 may be provided outside of the lower half 28, and the shutter 22 may be provided in both the upper half 16 and the lower half 28. Furthermore, the cartridge 15 with a configuration in which the shutter 22 is opened/closed by rotation has been described. However, even the shutter that slides along the side wall on a front side is applicable, for example, by engaging the shutter engagement portion with the first protrusion 9, as long as the side wall on a shutter side 20 is provided.

Furthermore, in the above-mentioned embodiment, the case in which facing surfaces form a hollow portion has been exemplified. However, a cover for covering the hollow portion may be provided. When there is a cover, for example, in the case where the cartridge is carried around in the case, the possibility of dust and damage with respect to the cartridge can be reduced remarkably. The cover may be provided separately from the case. However, there is a possibility that only the cover is lost, so the cover preferably is engaged with any edge forming a side surface of the case. In the case without the cover, the side surface may have a thickness of the cartridge, so that the thickness of the case may be that of the side surface. When the cover is provided, the thickness of the case is increased by the thickness of the cover.

As described above, the case according to the present embodiment can house a cartridge irrespective of the shape of the cartridge or the shutter, and can be prescribed to be thinner compared with the conventional configuration. Furthermore, by adopting a preferable embodiment, a user can freely select the ordinary housing embodiment for housing a cartridge in a state where a shutter is closed, and a housing embodiment for housing a cartridge in a state where the shutter is opened. Furthermore, by attaching a disk cleaning kit to a bottom plate, the disk housed in the cartridge can be cleaned, or the disk can be removed from the cartridge in a stable state of the cartridge. Therefore, damage and fingerprints can be prevented from adhering to a disk, whereby recording reliability can be enhanced.

### Industrial Applicability

As described above, according to the present invention, a case can be provided, in which the thickness in a direction substantially vertical to a disk housed in a cartridge is decreased, and foreign matter such as dust is suppressed from adhering to the disk housed in the cartridge.

## Claims

1. A case comprising a bottom plate in a substantially rectangular shape, and a first side plate and a second side plate rising respectively from a pair of border lines forming the bottom plate and facing each other, either one edge side orthogonal to the pair of border lines being an entrance, an insertion being inserted toward the other edge side to be housed in the case,
wherein, on an inner surface of the first side plate where the first side plate and the second side plate face each other, a first rib having a top face parallel to the inner surface of the first side plate is provided, with a height D 1 between the inner surface of the first side plate and the top face of the first rib,
on an inner surface of the second side plate where the second side plate and the first side plate face each other, a second rib having a top face parallel to the inner surface of the second side plate is provided so as to face the first rib, with a height D2 shorter than the height D1,
on the inner surface of the first side plate on the entrance side with respect to the first rib, a first protrusion having a top face parallel to the inner surface of the first side plate is provided with a height D3 shorter than the height D1, and
both a spatial distance D4 between the top face of the second rib and the inner surface of the first side plate, and a spatial distance D5 between the top face of the first protrusion and the inner surface of the second side plate allow a width D6 of the insertion in a facing direction of the first side plate and the second side plate to be inserted with a loose fit.

2. The case according to claim 1, wherein, on the inner surface of the first side plate on the entrance side with respect to the first protrusion, a second protrusion having a top face parallel to the inner surface of the first side plate is provided, with the height D3, and
on the inner surface of the first side plate between the first protrusion and the second protrusion, a rack is provided with a height D7 equal to or shorter than the height D3.

3. The case according to claim 1 or 2, wherein the insertion is a cartridge including an upper half and a lower half that face each other with a gap for housing a disk-shaped information medium placed therebetween, an opening window portion for exposing a part of the disk-shaped information medium through the upper half and/or the lower half, a shutter for opening and closing the opening window portion, a front wall engaged with the shutter to connect the upper half to the lower half, a first side wall and a second side wall respectively being connected to the upper half and the lower half and to the front wall, and a back wall facing the front wall,
the cartridge also includes a first partial stepped groove formed on a part of the first side wall, having a step in a direction toward the second side wall substantially at a center of the gap between the upper half and the lower half from an engagement line at which the first side wall is engaged with the front wall to the back wall, and a second partial stepped groove having a step in a direction toward the first side wall, formed on the second side wall at a position facing the first partial stepped groove, and
the first protrusion and the first rib slide to contact the first partial stepped groove, and the second rib slides to contact the second partial stepped groove, whereby the cartridge is inserted into the case.

4. The case according to claim 3, wherein each front edge of the upper half and the lower half, engaged with the front wall, forms an arc-shape, and the shutter includes an opening and closing engagement member for opening and closing the opening window portion by rotating along the arc-shape,
the opening and closing engagement member is provided in a full-length stepped groove having a step on the second side wall over an entire length of the first side wall substantially at a center between the upper half and the lower half on the first side wall, has a first hole and a second hole with which the second protrusion is engaged, and a gear portion engaged with the rack between the first hole and the second hole.

5. The case according to claim 1 or 2, comprising a third side plate rising from the other edge facing the entrance via the bottom plate, with the same height as that of the first side plate and the second side plate.

6. The case according to claim 4, wherein the insertion has a box-shaped body including a front wall to be inserted through the entrance, and a first side wall and a second side wall, respectively facing the first side plate and the second side plate of the front wall, the box-shaped body including a first partial stepped groove having a first bottom portion with a dent D8, extending from an engagement portion between the first front wall and the front wall in parallel with the bottom plate, and a second partial stepped groove having a second bottom portion with a dent D8, extending from an engagement portion between the second front wall and the front wall in parallel with the bottom plate, and
when the insertion is housed, a distance D9 between the first bottom portion and the second bottom portion is fit between the top face of the first rib and the top face of the second rib.

7. The case according to claim 1, 2, or 5, comprising a cover using, as a rotation axis, either edge of the first side plate parallel to the bottom plate, either edge of the second side plate parallel to the bottom plate, an edge of the bottom plate forming the entrance, an edge facing the edge of the bottom plate forming the entrance via the bottom plate, or either edge of the third side plate parallel to the bottom plate.

8. A method for opening a shutter of a cartridge by inserting, into the case of claim 1, the cartridge including an upper half and a lower half that face each other with a gap for housing a disk-shaped information medium interposed therebetween, an opening window portion for exposing a part of the disk-shaped information medium through the upper half and/or the lower half, a shutter for opening and closing the opening window portion, a front wall engaged with the shutter to connect the upper half to the lower half, a first side wall and a second side wall respectively being connected to the upper half and the lower half and to the front wall, and a back wall facing the front wall, and groove portions having steps on side walls respectively formed from boundary lines between the first side wall and the front wall, and the second side wall and the front wall, the method comprising:
a first step of inserting the cartridge into the entrance of the case;
a second step of inserting the first protrusion along the groove portion formed on the first side wall; and
a third step of inserting the first rib along the groove portion formed on the first side wall, and inserting the second rib along the groove portion formed on the second side wall,
wherein an opening and closing engagement portion for opening and closing the shutter is engaged with the first protrusion between the second step and the third step to open the shutter.

9. A method for opening a shutter of a cartridge by inserting, into the case of claim 2, the cartridge including an upper half and a lower half that face each other with a gap for housing a disk-shaped information medium interposed therebetween, an opening window portion for exposing a part of the disk-shaped information medium through the upper half and/or the lower half, a shutter for opening and closing the opening window portion, a front wall engaged with the shutter to connect the upper half to the lower half, a first side wall and a second side wall respectively being connected to the upper half and the lower half and to the front wall, a back wall facing the front wall, each edge of the upper half and the lower half engaged with the front wall forming an arc-shape, groove portions having steps on the side walls respectively formed from boundary lines between the first side wall and the front wall, and between the second side wall and the front wall, and an opening and closing engagement member formed on the first side wall so as to allow the shutter to rotate along the arc-shape, thereby opening and closing the opening window portion, and having a first hole, a second hole, and a gear portion between the first hole and the second hole, the method comprising:
a first step of inserting the cartridge into the entrance of the case;
a second step of inserting the second protrusion along the groove portion formed on the first side wall, and engaging the second protrusion with the first hole provided in the opening and closing member;
a third step of engaging the rack provided on the first side plate of the case with the gear portion to allow the shutter to rotate; and
a fourth step of engaging the first protrusion provided on the first side plate with the second hole to complete an opening operation of the shutter.

10. The method for opening a shutter of a cartridge according to claim 9, wherein the cartridge further includes an opening and closing engagement member provided so as to control the rotation of the shutter, and in the opening and closing engagement member, a rotation suppressing portion for suppressing the opening operation of the shutter due to rotation by being engaged with the first hole, and an engagement removal portion for removing the engagement between the rotation suppressing portion and the first hole, and
the rack contacts the engagement removal member to remove the engagement between the rotation suppressing portion and the first hole between the first step and the second step.
